# EUROPÄISCHE PATENTANMELDUNG

(11) **EP 3 834 901 A1**
(43) Veröffentlichungstag der Anmeldung: **16.06.2021**
(21) Anmeldenummer: 19216173.5
(22) Anmeldetag: 13.12.2019
(51) Int. Cl.: B01D 17/02, B01D 17/12

(54) **VORRICHTUNG, SYSTEM UND VERFAHREN ZUM TRENNEN EINES FLÜSSIGKEITSGEMISCHES IN EINE ERSTE PHASE UND EINE ZWEITE PHASE**

(71) Anmelder: ZeoSys Medical GmbH, 14943 Luckenwalde (DE)
(72) Erfinder: FRIEDRICH, Thomas, 10367 Berlin (DE); EWERS, Christian, 14943Luckenwalde (DE)
(74) Vertreter: Schulz Junghans Patentanwälte PartGmbB

(57) **Zusammenfassung**

Die Erfindung betrifft eine Vorrichtung (1) zum Trennen eines Flüssigkeitsgemisches in eine erste Phase (P1) und eine zweite Phase (P2), aufweisend einen Behälterraum (2) zur Aufnahme eines Flüssigkeitsgemisches, einen entlang einer Längsachse (L) erstreckten Mantel (30), der den Behälterraum (2) umschließt, zumindest einen senkrecht zu der Längsachse (L) erstreckten ersten Boden (20), der den Behälterraum (2) begrenzt, einen Einlauf (17) zum Einleiten eines Flüssigkeitsgemisches in den Behälterraum (2), einen ersten Auslauf (18) zum Abziehen einer ersten Phase (P1) des Flüssigkeitsgemisches aus dem Behälterraum (2) und einen zweiten Auslauf (19) zum Abziehen einer zweiten Phase (P2) des Flüssigkeitsgemisches aus dem Behälterraum (2), wobei der erste Auslauf (18) entlang der Längsachse (L) einen größeren Abstand von dem ersten Boden (20) aufweist als der zweite Auslauf (19), so dass der erste Auslauf (18) oberhalb des zweiten Auslaufes (19) anordenbar ist, wobei die Vorrichtung (1) eine entlang der Längsachse (L) verlaufende Trennwand (10) aufweist, die den Behälterraum (2) in einen ersten Teilraum (40) und einen zweiten Teilraum (50) aufteilt, wobei der Einlauf (17) in den ersten Teilraum (40) mündet, und wobei der erste Teilraum (40) mit dem zweiten Teilraum (50) in Strömungsverbindung steht, so dass sich das Flüssigkeitsgemisch in dem ersten Teilraum (40) und dem zweiten Teilraum (50) sammeln und in die erste Phase (P1) und die zweite Phase (P2) auftrennen kann.

Weiterhin betrifft die Erfindung ein System umfassend eine Vorrichtung (1) zum Trennen eines Flüssigkeitsgemisches und eine Vorrichtung (3) zur Desorption halogenierter Kohlenwasserstoffe sowie ein Verfahren zum Trennen eines Flüssigkeitsgemisches in eine erste Phase (P1) und eine zweite Phase (P2).

## Beschreibung

Die Erfindung betrifft eine Vorrichtung und ein Verfahren zum Trennen eines Flüssigkeitsgemisches in eine erste und eine zweite Phase sowie ein System umfassend die erfindungsgemäße Vorrichtung und eine Vorrichtung zur Desorption halogenierter Kohlenwasserstoffe.

Flüssigkeitsgemische unterschiedlicher Dichte und/oder Polarität können bei verschiedensten chemischen Vorgängen auftreten, z.B. bei der Desorption adsorbierter halogenierter Kohlenwasserstoffe von einem Adsorbens mittels Wasserdampf. Solche Flüssigkeitsgemische lassen sich in bekannter Weise in die verschiedenen Phasen auftrennen, indem das Gemisch durch einen Einlauf in einen Behälter eingeleitet wird, wo sich die Phasen nach einer gewissen Zeit unter Bildung einer Phasengrenze entmischen. Die Phasen können dann über getrennte Ausläufe aus dem Behälter abgezogen werden, wobei der Auslauf für die obere Phase oberhalb der Phasengrenze positioniert ist und der Auslauf für die untere Phase unterhalb der Phasengrenze angeordnet ist.

Insbesondere aus Zeitgründen ist es vorteilhaft, solche Trennverfahren kontinuierlich durchzuführen, d.h. während die erste Phase und/oder die zweite Phase über die getrennten Ausläufe aus dem Behälter abgezogen werden, wird gleichzeitig neues Flüssigkeitsgemisch durch den Einlauf in den Behälter eingeleitet.

Dabei ergibt sich jedoch das Problem, dass Flüssigkeitsgemisch auf direktem Weg von dem Einlauf zu den Ausläufen oder einem der Ausläufe gelangen kann. Dadurch wird die Trennwirkung der Vorrichtung stark beeinträchtigt und es sind gegebenenfalls weitere Trennschritte notwendig, was zusätzliche Kosten verursacht.

Daher ist es die Aufgabe der vorliegenden Erfindung, eine Vorrichtung und ein Verfahren zum Trennen eines Flüssigkeitsgemisches bereitzustellen, die bzw. das im Hinblick auf die oben erläuterten Nachteile des Standes der Technik verbessert ist.

Diese Aufgabe wird durch den Gegenstand der unabhängigen Ansprüche 1 (Vorrichtung), 10 (System) und 12 (Verfahren) gelöst. Vorteilhafte Ausgestaltungen der Erfindung sind in den Unteransprüchen 2 bis 8, 11 und 13 bis 15 angegeben und werden im Folgenden beschrieben.

Ein erster Aspekt der Erfindung betrifft eine Vorrichtung zum Trennen eines Flüssigkeitsgemisches in eine erste Phase und eine zweite Phase, aufweisend einen Behälterraum zur Aufnahme eines Flüssigkeitsgemisches, einen entlang einer Längsachse erstreckten Mantel, der den Behälterraum umschließt, zumindest einen senkrecht zu der Längsachse erstreckten ersten Boden, der den Behälterraum begrenzt, einen Einlauf zum Einleiten eines Flüssigkeitsgemisches in den Behälterraum und einen ersten Auslauf zum Abziehen einer ersten Phase des Flüssigkeitsgemisches aus dem Behälterraum. Die Vorrichtung weist weiterhin einen zweiten Auslauf zum Abziehen einer zweiten Phase des Flüssigkeitsgemisches aus dem Behälterraum auf, wobei der erste Auslauf entlang der Längsachse einen größeren Abstand von dem ersten Boden aufweist als der zweite Auslauf, so dass der erste Auslauf oberhalb des zweiten Auslaufes anordenbar ist.

Die Längsachse verläuft dabei beim bestimmungsgemäßen Betrieb der Vorrichtung insbesondere vertikal. Bei einer vertikalen Ausrichtung der Längsachse begrenzt der Mantel den Behälterraum seitlich und der erste Boden ist entlang der Horizontalen erstreckt und begrenzt den Behälterraum insbesondere nach unten hin.

Der Mantel, der auch als Seitenwand bezeichnet werden kann, verläuft insbesondere in Umfangsrichtung bezüglich der Längsachse. Insbesondere kann der Mantel im Querschnitt senkrecht zu der Längsachse kreisförmig um die Längsachse herum verlaufen, jedoch sind selbstverständlich auch andere Formen vom Gegenstand der Erfindung erfasst, z. B. Mäntel viereckiger oder sechseckiger Querschnittsform.

Bei dem Einlauf, dem ersten Auslauf und dem zweiten Auslauf handelt es sich um Öffnungen im Mantel bzw. in der Seitenwand, die Stutzen aufweisen können und insbesondere jeweils mit einer Flüssigkeitsleitung verbunden sind. Die entsprechende Öffnung bzw. Flüssigkeitsleitung kann dabei offen oder verschließbar sein, z. B. durch ein, insbesondere steuerbares, Ventil.

Im Zusammenhang der vorliegenden Erfindung bezeichnet der Begriff "Flüssigkeitsgemisch" ein Gemisch mindestens zweier Stoffe, die bei 20°C und 1 bar Luftdruck überwiegend (d.h. zu mindestens 90 % Massenanteil) in flüssiger Form vorliegen, wobei die Stoffe eine unterschiedliche Dichte und/oder eine unterschiedliche Polarität aufweisen, sodass sich das Gemisch ohne Mischen der Stoffe in eine erste Phase und eine zweite Phase auftrennt. Dabei bildet sich eine Phasengrenze aus, wobei insbesondere der Stoff geringerer Dichte die obere Phase ausbildet und der Stoff höherer Dichte die untere Phase ausbildet.

Bei der ersten Phase kann es sich dabei um die obere Phase handeln, wobei die zweite Phase die untere Phase ist. Ebenso kann es sich bei der ersten Phase um die untere Phase handeln, wobei die zweite Phase die obere Phase ist.

Erfindungsgemäß ist vorgesehen, dass die Vorrichtung mindestens eine entlang der Längsachse verlaufende Trennwand aufweist, die den Behälterraum quer zu der Längsachse zumindest in einen ersten Teilraum und einen zweiten Teilraum aufteilt, wobei der Einlauf in den ersten Teilraum mündet, und wobei der erste Teilraum, insbesondere in einem an den ersten Boden angrenzenden Bereich des Behälterraumes, mit dem zweiten Teilraum in Strömungsverbindung steht, so dass sich das Flüssigkeitsgemisch in dem ersten Teilraum und dem zweiten Teilraum sammeln und in die erste Phase und die zweite Phase auftrennen kann.

Insbesondere mündet der zweite Teilraum dabei in den ersten Auslauf.

Weiterhin ist gemäß einer Ausführungsform der Vorrichtung vorgesehen, dass die Trennwand zwischen dem Einlauf und dem ersten Auslauf angeordnet ist, so dass ein direkter Strömungspfad zwischen dem Einlauf und dem ersten Auslauf durch die Trennwand unterbrochen ist.

Die besagte Trennwand bildet gemäß einer Ausführungsform eine im Wesentlichen ebene Fläche, die entlang der Längsachse verläuft, mit anderen Worten die Flächennormale der Fläche verläuft senkrecht zu der Längsachse. Insbesondere weist die Trennwand einen senkrecht zu der Längsachse verlaufenden ersten Rand auf, der dem ersten Boden zugewandt ist, insbesondere an den ersten Boden angrenzt. Dieser erste Rand bildet bei einer vertikalen Ausrichtung der Längsachse einen unteren Rand der Trennwand. Gegenüber dem ersten Rand weist die Trennwand einen ebenfalls senkrecht zu der Längsachse verlaufenden zweiten Rand auf, der bei vertikaler Ausrichtung der Längsachse einen oberen Rand der Trennwand bildet. Weiterhin weist die Trennwand insbesondere einen entlang der Längsachse verlaufenden dritten Rand und einen dem dritten Rand gegenüberliegenden entlang der Längsachse verlaufenden vierten Rand auf, wobei der dritte Rand und der vierte Rand jeweils, insbesondere fluiddicht an dem Mantel anliegen. Der dritte Rand und der vierte Rand kann z. B. jeweils mit dem Mantel verschweißt sein oder z.B. über eine Dichtung mit dem Mantel verbunden sein.

Selbstverständlich kann die Trennwand alternativ auch eine andere, nicht-ebene Form aufweisen, z.B. kann die Trennwand rohrförmig ausgebildet sein.

Die Trennwand teilt den Behälterraum, insbesondere senkrecht zu der Längsachse, in zumindest einen ersten Teilraum und einen zweiten Teilraum auf. Dabei können der erste Teilraum und der zweite Teilraum gleich groß oder unterschiedlich groß sein. Insbesondere verläuft die Trennwand im Querschnitt senkrecht zu der Längsachse durch einen Mittelpunkt des Behälterraumes, also bei einer kreisförmigen Ausgestaltung des Mantels entlang eines Durchmessers dieses Kreises. Alternativ dazu kann die Trennwand auch von dem Mittelpunkt beanstandet sein, also bei einer kreisförmigen Ausgestaltung des Mantels insbesondere entlang einer Sekante verlaufen. In diesem Fall sind der erste Teilraum und der zweite Teilraum unterschiedlich groß. Natürlich können der erste Teilraum und der zweite Teilraum auch bei einem Verlauf der Trennwand durch den Mittelpunkt unterschiedlich groß sein, z. B. aufgrund von in dem ersten Teilraum oder dem zweiten Teilraum angeordneten zusätzlichen Komponenten.

Die Trennwand ist insbesondere zwischen dem Einlauf und dem ersten Auslauf angeordnet. Dies bedeutet, dass eine gedachte (gerade) Verbindungslinie zwischen dem Einlauf und dem ersten Auslauf durch die Trennwand verläuft bzw. die Trennwand schneidet.

Der erste Teilraum steht mit dem zweiten Teilraum in Strömungsverbindung, d.h. der Pegel des Flüssigkeitsgemisches oder der ersten und zweiten Phase kann sich über die besagte Strömungsverbindung zwischen dem ersten und dem zweiten Teilraum ausgleichen.

Durch die Trennwand wird insbesondere der direkte Strömungspfad zwischen dem Einlauf und dem ersten Auslauf unterbrochen, sodass das durch den Einlauf in den Behälterraum eintretende Flüssigkeitsgemisch nicht direkt zum ersten Auslauf gelangen kann. Dies verbessert die Trennleistung der Vorrichtung, sodass gegebenenfalls notwendige weitere Trennschritte entfallen können. Durch die Strömungsverbindung zwischen dem ersten und zweiten Teilraum wird gleichzeitig die Aufnahmekapazität des Behälterraumes durch die Trennwand nicht vermindert, sodass ein höherer Durchsatz des Trennverfahrens ermöglicht wird.

Dabei ist insbesondere die Trennwand zwischen dem Einlauf und dem zweiten Auslauf angeordnet, so dass auch ein direkter Strömungspfad zwischen dem Einlauf und dem zweiten Auslauf durch die Trennwand unterbrochen ist. Dies verbessert die Trennleistung auch bezüglich der Reinheit der durch den zweiten Auslauf abgezogenen zweiten Phase des Flüssigkeitsgemisches.

Gemäß einer Ausführungsform mündet der zweite Teilraum in den zweiten Auslauf.

Gemäß einer weiteren Ausführungsform weist die Vorrichtung eine erste Trennwand und eine zweite Trennwand auf, wobei die erste Trennwand und die zweite Trennwand den Behälterraum in den ersten Teilraum, den zweiten Teilraum sowie einen dritten Teilraum aufteilen, und wobei der erste Teilraum, der zweite Teilraum und der dritte Teilraum in Strömungsverbindung miteinander stehen, so dass sich das Flüssigkeitsgemisch in dem ersten Teilraum, dem zweiten Teilraum und dem dritten Teilraum sammeln und in die erste und die zweite Phase auftrennen kann.

Gemäß einer weiteren Ausführungsform weist die Vorrichtung zusätzlich zu der ersten Trennwand und der zweiten Trennwand mindestens eine weitere Trennwand bzw. eine dritte Trennwand auf, wobei die erste Trennwand, die zweite Trennwand und die mindestens eine weitere Trennwand den Behälterraum in den ersten Teilraum, den zweiten Teilraum, den dritten Teilraum sowie mindestens einen weiteren Teilraum aufteilen, und wobei der erste Teilraum, der zweite Teilraum, der dritte Teilraum und der mindestens eine weitere Teilraum in Strömungsverbindung miteinander stehen, so dass sich das Flüssigkeitsgemisch in dem ersten Teilraum, dem zweiten Teilraum, dem dritten Teilraum und dem mindestens einen weiteren Teilraum sammeln und in die erste Phase und die zweite Phase auftrennen kann.

Der Behälterraum wird demnach durch die Mehrzahl an Trennwänden in mehrere Teilräume aufgeteilt. Dies steigert die Aufenthaltszeit des Flüssigkeitsgemisches beim Ablaufen in die Teilräume des Behälterraumes, was eine verbesserte Phasentrennung bewirkt.

Gemäß einer weiteren Ausführungsform weist die erste Trennwand eine entlang der Längsachse verlaufende erste Höhe auf und die zweite Trennwand weist eine entlang der Längsachse verlaufende zweite Höhe auf, die geringer ist als die erste Höhe. Dabei ist die erste Trennwand insbesondere dem Einlauf zugewandt, d.h. zwischen der ersten Trennwand und dem Einlauf befindet sich keine weitere Trennwand.

Die Trennwände sind nach dieser Ausführungsform also kaskadenartig ausgeführt, was kontinuierliches Überströmen des Flüssigkeitsgemisches bei einer Erhöhung des Pegels bewirkt, und somit eine verbesserte Trennwirkung zur Folge hat.

Gemäß einer weiteren Ausführungsform weist die mindestens eine weitere Trennwand bzw. die dritte Trennwand eine entlang der Längsachse verlaufende dritte Höhe auf, die geringer ist als die erste Höhe und die zweite Höhe.

Gemäß einer weiteren Ausführungsform ist die Trennwand bzw. die mindestens eine Trennwand rohrförmig ausgebildet, so dass der erste Teilraum außerhalb der Trennwand gebildet ist und der zweite Teilraum innerhalb der Trennwand gebildet ist. Mit anderen Worten: die Trennwand bildet ein in Umfangsrichtung bezüglich der Längsachse verlaufendes und in der Umfangsrichtung geschlossenes Rohr innerhalb des Behälterraumes aus, das insbesondere konzentrisch zu dem Mantel verlaufen kann, der den Behälterraum umschließt.

Gemäß einer weiteren Ausführungsform weist die rohrförmige Trennwand ein erstes Ende auf, welches dem ersten Boden der Vorrichtung zugewandt ist, wobei das erste Ende von dem ersten Boden einen Abstand von mindestens 1 cm, insbesondere mindestens 2 cm, aufweist. Mit dem Abstand ist dabei insbesondere der Abstand entlang bzw. in Richtung der Längsachse gemeint.

Dies stellt sicher, dass innerhalb der rohrförmigen Trennwand stets eine Schicht der oberen (insbesondere leichteren) Phase (z.B. der ersten Phase) über der unteren Phase (z.B. der zweiten Phase) steht, was beispielsweise im Falle einer flüchtigen unteren Phase (z.B. halogenierte Inhalationsanästhetika) verhindert, dass die untere Phase über den Kopfraum der rohrförmigen Trennwand ausgast.

Gemäß einer weiteren Ausführungsform der Vorrichtung ist der zweite Auslauf an oder in dem ersten Boden der Vorrichtung angeordnet. Somit ist der Abstand des zweiten Auslaufes von der Phasengrenze zwischen der ersten Phase der zweiten Phase maximal, sodass auch bei einer noch nicht vollständig abgeschlossenen Entmischung zwischen der ersten Phase und der zweiten Phase Verunreinigungen der aus dem Behälterraum entnommenen zweiten Phase durch geringe Anteile der ersten Phase minimiert sind. Zudem lässt sich der zweite Auslauf an dem ersten Boden auf konstruktionstechnisch einfache Weise anbringen.

Gemäß einer weiteren Ausführungsform der Vorrichtung ist die Trennwand bzw. die mindestens eine Trennwand von dem ersten Boden beabstandet, so dass der erste Teilraum mit dem zweiten Teilraum über einen zwischen der Trennwand und dem ersten Boden ausgebildeten ersten Spalt in Strömungsverbindung steht. D. h., der erste Rand der Trennwand liegt nicht direkt an dem ersten Boden an, sondern zwischen dem ersten Boden und der Trennwand ist ein erster Spalt ausgebildet. Dadurch kann auf konstruktionstechnisch besonders einfache Art und Weise eine Strömungsverbindung zwischen dem ersten Teilraum und den zweiten Teilraum hergestellt werden.

Gemäß einer Ausführungsform ist (im Fall mehrerer Trennwände) jede der Trennwände von dem ersten Boden beabstandet, so dass der erste Teilraum mit dem zweiten Teilraum und dem dritten Teilraum (sowie ggf. mit den weiteren Teilräumen) über einen zwischen der jeweiligen Trennwand und dem ersten Boden ausgebildeten ersten Spalt in Strömungsverbindung steht

Gemäß einer weiteren Ausführungsform der Vorrichtung weist die Trennwand bzw. die mindestens eine Trennwand, insbesondere in dem an den ersten Boden angrenzenden Bereich des Behälterraumes, mindestens eine Öffnung auf, wobei der erste Teilraum über die mindestens eine Öffnung mit dem zweiten Teilraum in Strömungsverbindung steht. Durch die mindestens eine Öffnung kann die Strömungsverbindung zwischen dem ersten Teilraum und dem zweiten Teilraum auf besonders gut kontrollierte Weise ermöglicht werden, wobei insbesondere eine erneute Mischung der ersten und zweiten Phase reduziert wird.

Gemäß einer weiteren Ausführungsform der Vorrichtung weist (im Falle mehrerer Trennwände) jede Trennwand, insbesondere in dem an den ersten Boden angrenzenden Bereich des Behälterraumes, jeweils mindestens eine Öffnung auf, wobei der erste Teilraum über die jeweilige mindestens eine Öffnung mit dem zweiten Teilraum, dem dritten Teilraum und/oder dem mindestens einen weiteren Teilraum in Strömungsverbindung steht.

Gemäß einer weiteren Ausführungsform ist der Einlauf mit einem Rohrstück verbunden, wobei das Rohrstück eine Ausströmöffnung aufweist, die dem Mantel der Vorrichtung zugewandt ist, so dass aus der Ausströmöffnung austretendes Flüssigkeitsgemisch in Richtung des Mantels geleitet wird.

Durch dieses Rohrstück kann das Flüssigkeitsgemisch beim Eintritt in den Behälterraum am Mantel der Vorrichtung ablaufen, was eine weitere Verbesserung der Trennwirkung zur Folge hat.

Gemäß einer weiteren Ausführungsform weist die Vorrichtung einen senkrecht zu der Längsachse erstreckten zweiten Boden auf, der den Behälterraum an einem dem ersten Boden gegenüberliegenden Ende begrenzt, wobei insbesondere der erste Teilraum über einen zwischen der Trennwand und dem zweiten Boden ausgebildeten zweiten Spalt mit dem zweiten Teilraum in Strömungsverbindung steht. Bei einer vertikalen Anordnung der Längsachse begrenzt der zweite Boden insbesondere den Behälterraum nach oben hin. Ein oberer Abschluss des Behälterraumes ist z. B. bei flüchtigen oder steril zu haltenden Flüssigkeiten äußerst wichtig, damit die flüchtige Phase des Flüssigkeitsgemisches nicht entweicht bzw. damit keine Kontaminationen von außen in den Behälterraum gelangen.

Gemäß einer weiteren Ausführungsform weist die Vorrichtung mindestens ein Ventil zum Öffnen und/oder Verschließen (bzw. Drosseln) des Einlaufs, des ersten Auslaufs und/oder des zweiten Auslaufs auf.

Gemäß einer weiteren Ausführungsform weist die Vorrichtung eine Messvorrichtung zum Ermitteln der Position einer Phasengrenze zwischen der ersten Phase und der zweiten Phase in dem Behälterraum oder zum Ermitteln eines Pegels des Flüssigkeitsgemisches in dem Behälterraum auf.

Gemäß einer weiteren Ausführungsform weist die Vorrichtung eine erste Steuervorrichtung zum Öffnen und/oder Verschließen (bzw. Drosseln) des mindestens einen Ventils bei einer vordefinierten Position der Phasengrenze oder bei einer vordefinierten Position des Pegels des Flüssigkeitsgemisches auf.

Die vordefinierte Position des Pegels bzw. der Phasengrenze liegt insbesondere entlang der Längsachse oberhalb eines dem ersten Boden zugewandten ersten Randes der Trennwand bzw. der ersten Trennwand und unterhalb eines dem ersten Boden abgewandten zweiten Randes der Trennwand bzw. der ersten Trennwand.

Gemäß einer weiteren Ausführungsform ist die erste Steuervorrichtung dazu konfiguriert, das Öffnen und/oder Verschließen (bzw. Drosseln) des mindestens einen Ventils so zu steuern, dass die Phasengrenze bzw. der Pegel entlang der Längsachse oberhalb eines dem ersten Boden zugewandten ersten Randes der Trennwand bzw. der ersten Trennwand und unterhalb eines dem ersten Boden abgewandten zweiten Randes der Trennwand bzw. der ersten Trennwand steht.

Gemäß einer weiteren Ausführungsform weist die Vorrichtung ein erstes Ventil zum Öffnen und/oder Verschließen (bzw. Drosseln) des Einlaufs auf.

Gemäß einer weiteren Ausführungsform ist die erste Steuervorrichtung dazu konfiguriert, das erste Ventil zu öffnen, wenn die Position der Phasengrenze bzw. der Pegel (insbesondere entlang der Längsachse) unterhalb einer vordefinierten Position liegt und/oder die erste Steuervorrichtung ist dazu konfiguriert, das erste Ventil zu verschließen (bzw. zu drosseln), wenn die Position der Phasengrenze bzw. der Pegel der vordefinierten Position entspricht oder (insbesondere entlang der Längsachse) oberhalb der vordefinierten Position liegt.

Gemäß einer weiteren Ausführungsform weist die Vorrichtung ein zweites Ventil zum Öffnen und/oder Verschließen (bzw. Drosseln) des zweiten Auslaufs auf.

Gemäß einer weiteren Ausführungsform ist die erste Steuervorrichtung dazu konfiguriert, das zweite Ventil zu öffnen, wenn die Position der Phasengrenze bzw. der Pegel der vordefinierten Position entspricht oder (insbesondere entlang der Längsachse) oberhalb der vordefinierten Position liegt, und/oder die erste Steuervorrichtung ist dazu konfiguriert, das zweite Ventil zu verschließen (bzw. zu drosseln). wenn die Position der Phasengrenze bzw. der Pegel (insbesondere entlang der Längsachse) unterhalb einer vordefinierten Position liegt

Gemäß einer weiteren Ausführungsform ist die erste Steuervorrichtung zum Steuern einer Zulaufrate des Flüssigkeitsgemisches in den Behälterraum, einer ersten Ablaufrate der ersten Phase aus dem Behälterraum und/oder einer zweiten Ablaufrate der zweiten Phase aus dem Behälterraum anhand des durch die Messvorrichtung ermittelten Pegels des Flüssigkeitsgemisches oder anhand der durch die Messvorrichtung ermittelten Position der Phasengrenze konfiguriert, insbesondere wobei die erste Steuervorrichtung dazu konfiguriert ist, die Zulaufrate, die erste Ablaufrate und/oder die zweite Ablaufrate so zu steuern, dass der Pegel bzw. die Phasengrenze entlang der Längsachse oberhalb eines dem ersten Boden zugewandten ersten Randes der Trennwand bzw. der ersten Trennwand und unterhalb eines dem ersten Boden abgewandten zweiten Randes der Trennwand bzw. der ersten Trennwand steht.

Die Messvorrichtung kann z.B. als Schwimmer ausgebildet sein oder einen Schwimmer aufweisen.

Der Pegel des Flüssigkeitsgemisches ist dabei im Fall einer schon erfolgten Phasentrennung identisch mit dem Pegel der oberen Phase, insbesondere der ersten Phase.

Die erste Steuervorrichtung steuert insbesondere das Öffnen und/oder Schließen der Ventile bzw. die genannten Zulauf- bzw. Ablaufraten anhand des durch die Messvorrichtung ermittelten Pegels, d. h. die Messvorrichtung sendet insbesondere einen Parameter an die erste Steuervorrichtung, welcher von dem ermittelten Pegel oder der ermittelten Position der Phasengrenze abhängig ist und die erste Steuervorrichtung steuert das Öffnen und/oder Schließen der Ventile bzw. die Zulauf- bzw. Ablaufraten in Abhängigkeit dieses Parameters. Gemäß einer weiteren Ausführungsform ist die erste Steuervorrichtung dazu eingerichtet, die Zulaufrate zu erhöhen und/oder die erste Ablaufrate oder die zweite Ablaufrate zu vermindern, wenn der Pegel des Flüssigkeitsgemisches oder die Position der Phasengrenze einen unteren Wert bzw. unteren Schaltpunkt unterschreitet.

Gemäß einer weiteren Ausführungsform ist die erste Steuervorrichtung dazu eingerichtet, das (am Einlauf angeordnete) erste Ventil zu öffnen oder das (am zweiten Auslauf angeordnete) zweite Ventil zu verschließen oder zu drosseln, wenn der Pegel des Flüssigkeitsgemisches oder die Position der Phasengrenze einen unteren Wert bzw. unteren Schaltpunkt unterschreitet.

Gemäß einer weiteren Ausführungsform weist die Trennwand in Richtung der Längsachse eine Höhe auf, wobei der untere Schaltpunkt oberhalb des unteren Zwanzigstels, insbesondere oberhalb des unteren Zehntels, der Höhe positioniert ist.

Gemäß einer weiteren Ausführungsform ist die erste Steuervorrichtung dazu eingerichtet, die Zulaufrate zu vermindern und/oder die erste Ablaufrate oder die zweite Ablaufrate zu erhöhen, wenn der Pegel des Flüssigkeitsgemisches oder die Position der Phasengrenze einen oberen Wert bzw. oberen Schaltpunkt überschreitet.

Gemäß einer weiteren Ausführungsform ist die erste Steuervorrichtung dazu eingerichtet, das (am Einlauf angeordnete) erste Ventil zu verschließen oder zu drosseln oder das (am zweiten Auslauf angeordnete) zweite Ventil zu öffnen, wenn der Pegel des Flüssigkeitsgemisches oder die Position der Phasengrenze einen oberen Wert bzw. oberen Schaltpunkt überschreitet.

Gemäß einer weiteren Ausführungsform weist die Trennwand in Richtung der Längsachse eine Höhe auf, wobei der obere Schaltpunkt unterhalb des oberen Zwanzigstels, insbesondere unterhalb des oberen Zehntels, der Höhe positioniert ist.

Die Erhöhung oder Verminderung der Zulauf- bzw. Ablaufraten kann z. B. durch die Steuerung entsprechender Drosselventile im Einlauf, ersten oder zweiten Auslauf oder in den damit verbundenen Flüssigkeitsleitungen erfolgen.

Gemäß einer weiteren Ausführungsform ist die erste Steuervorrichtung dazu eingerichtet, das Öffnen und/oder Schließen der Ventile bzw. die Zulaufrate, die erste Ablaufrate und oder die zweite Ablaufrate so zu steuern, dass die zwischen der ersten Phase und der zweiten Phase ausgebildete Phasengrenze entlang der Längsachse unterhalb des zweiten Rands (oberen Rands) der Trennwand verläuft. Dabei ist die Vorrichtung insbesondere derart positioniert, dass die Längsachse vertikal verläuft.

Die Position der Phasengrenze kann dabei in dem Fachmann bekannter Weise gemessen werden oder im Fall einer Messung des Pegels aus der Gesamtmenge des Flüssigkeitsgemisches, dem Mischungsverhältnis der beiden Phasen bzw. Komponenten des Flüssigkeitsgemisches und den Eigenschaften der entsprechenden Stoffe berechnet bzw. vorhergesagt werden.

Gemäß einer weiteren Ausführungsform weist die Trennwand in Richtung der Längsachse eine Höhe auf, wobei die erste Steuervorrichtung dazu eingerichtet ist, die Zulaufrate, die erste Ablaufrate und oder die zweite Ablaufrate so zu steuern, dass die zwischen der ersten Phase und der zweiten Phase ausgebildete Phasengrenze unterhalb des oberen Zwanzigstels, insbesondere unterhalb des oberen Zehntels, der Höhe der Trennwand und/oder oberhalb des unteren Zwanzigstels, insbesondere oberhalb des unteren Zehntels, der Höhe der Trennwand verläuft. Dabei ist die Vorrichtung insbesondere derart positioniert, dass die Längsachse vertikal verläuft.

Gemäß einer weiteren Ausführungsform weist die Vorrichtung zum Trennen eines Flüssigkeitsgemisches einen Speicherbehälter zur Aufnahme der ersten Phase oder der zweiten Phase des Flüssigkeitsgemisches auf, wobei der Speicherbehälter mit dem ersten Auslauf oder dem zweiten Auslauf des Behälterraums in Strömungsverbindung steht oder bringbar ist, sodass die erste Phase über den ersten Auslauf aus dem Behälterraum in den Speicherbehälter einleitbar ist oder die zweite Phase über den zweiten Auslauf aus dem Behälterraum in den Speicherbehälter einleitbar ist.

Gemäß einer weiteren Ausführungsform weist die Vorrichtung ein Abweiselement auf, wobei das Abweiselement angrenzend an den ersten Auslass positioniert ist, und wobei das Abweiselement dazu eingerichtet ist, zu verhindern, dass in der ersten Phase vorhandene Partikel und/oder Flüssigkeitstropfen der zweiten Phase zu dem ersten Auslass gelangen.

Gemäß einer weiteren Ausführungsform überdeckt das Abweiselement den ersten Auslass entlang der Längsachse, wobei das Abweiselement entlang der Längsachse durchgängig geöffnet ist (so dass Flüssigkeit das Abweiselement entlang der Längsachse durchströmen kann) und senkrecht zu der Längsachse geschlossen ist, insbesondere wobei das Abweiselement als im Querschnitt senkrecht zu der Längsachse U-förmiges Profil ausgebildet ist.

Gemäß einer weiteren Ausführungsform weist das Abweiselement eine dem ersten Boden zugewandte erste (untere) Öffnung sowie eine der ersten Öffnung entlang der Längsachse (L) gegenüberliegende zweite (obere) Öffnung auf.

Das Abweiselement hält Verunreinigungen wie Partikel und gegebenenfalls in der ersten bzw. oberen Phase vorliegende Tropfen der zweiten bzw. unteren Phase (insbesondere beim Aufsteigen des Pegels und der Phasengrenze während der Füllung des Behälterraumes) zurück und verhindert, dass diese durch den ersten Auslass aus dem Behälterraum hinausgelangen.

Gemäß einer weiteren Ausführungsform weist das Abweiselement angrenzend an die erste Öffnung senkrecht zu der Längsachse eine geringere Querschnittsfläche auf als angrenzend an die zweite (obere) Öffnung.

Dadurch wird die Partikel- bzw. Tropfenmenge beim Aufsteigen des Pegels und der Phasengrenze während der Füllung des Behälterraumes weiter reduziert.

Gemäß einer weiteren Ausführungsform weist die Vorrichtung ein angrenzend an die erste Öffnung des Abweiselements angeordnetes Leitelement zum Leiten von Partikeln und/oder Flüssigkeitstropfen an der ersten Öffnung vorbei zu einer Oberfläche der ersten Phase auf.

Gemäß einer weiteren Ausführungsform ist das Leitelement flächig ausgebildet.

Gemäß einer weiteren Ausführungsform verläuft das Leitelement in einer Ebene, die unter einem Winkel zwischen 0° und 90° (also 0°<90°) zu der Längsachse von dem Mantel aus in Richtung eines dem ersten Boden gegenüberliegenden Endes des Behälterraumes verläuft.

Das Leitelement leitet Partikel und Tropfen der unteren Phase (insbesondere beim Aufsteigen des Pegels und der Phasengrenze während der Füllung des Behälters) vorteilhafterweise von dem ersten Auslass weg zur Mitte des Behälterraumes. Dies dient dem Schutz der Vorrichtung vor Eintrag von Partikeln und Tropfen der zweiten Phase und erhöht die Ausbeute der getrennten ersten und zweiten Phase.

Insbesondere ist bzw. sind das Abweiselement und/oder das Leitelement an dem Mantel der Vorrichtung fixiert, z.B. angeschweißt, das Abweiselement könnte jedoch auch einteilig mit dem Mantel ausgebildet sein (z.B. mittels 3D-Druck hergestellt).

Ein zweiter Aspekt der Erfindung betrifft ein System umfassend eine Vorrichtung zum Trennen eines Flüssigkeitsgemisches nach dem ersten Aspekt der Erfindung und eine Vorrichtung zur Desorption halogenierter Kohlenwasserstoffe, wobei die Vorrichtung zur Desorption halogenierter Kohlenwasserstoffe einen, insbesondere bis 0,4 MPa druckstabilen, Desorptionsbehälter, ein in dem Desorptionsbehälter angeordnetes Adsorbens, insbesondere ein Schüttgut, zum Adsorbieren halogenierter Kohlenwasserstoffe, einen Dampfeingang zum Einleiten von Wasserdampf in den Desorptionsbehälter und einen Desorbatausgang zum Abziehen eines Wasser und halogenierte Kohlenwasserstoffe aufweisenden Desorbats aus dem Desorptionsbehälter aufweist, wobei der Desorbatausgang der Vorrichtung zur Desorption halogenierter Kohlenwasserstoffe mit dem Einlauf der Vorrichtung zum Trennen eines Flüssigkeitsgemisches in Strömungsverbindung bringbar ist, so dass ein aus dem Desorbat durch Kondensation erzeugtes Flüssigkeitsgemisch über den Einlauf in den ersten Teilraum des Behälterraumes der Vorrichtung zum Trennen eines Flüssigkeitsgemisches einleitbar und in dem Behälterraum in eine durch das Wasser gebildete erste Phase und eine durch die halogenierten Kohlenwasserstoffe gebildete zweite Phase trennbar ist. Insbesondere weist dabei das Adsorbens adsorbierte halogenierte Kohlenwasserstoffe auf, das heißt es handelt sich um ein sogenanntes Sorbat.

Der Begriff "Adsorbens" oder "Sorptionsmittel" bezieht sich im Kontext der vorliegenden Beschreibung auf ein Material, das Gase an seiner Oberfläche adsorbieren kann.

Der Begriff "Sorbat" bezeichnet das Adsorbens mit den daran adsorbierten Gasen.

Der Begriff "Desorbat" bezeichnet die desorbierten Gase. Dabei bezeichnet das Wort "desorbieren" bzw. "Desorption" die Ablösung der Gase von dem Adsorbens.

Der Begriff "Sorptiv" bezeichnet die zu adsorbierenden Gase.

Mit derartigen Vorrichtungen zur Desorption halogenierter Kohlenwasserstoffe können z.B. aus der Atemluft an Filtermaterialien adsorbierte halogenierte Kohlenwasserstoffe zurückgewonnen werden. Eine wichtige Anwendung hierfür ist die Rückgewinnung von Inhalationsanästhetika, z.B. aus der Klasse der Flurane, aus der Atemluft von Patienten. Eine Filterung der Atemluft ist in diesem Fall zum Schutz der Gesundheit von Krankenhauspersonal sowie aus Umweltschutzgründen äußerst vorteilhaft. Dabei ist eine Rückgewinnung der teuren Inhalationsanästhetika aus wirtschaftlicher Sicht sehr wünschenswert. Das oben beschriebene System ermöglicht es, solche halogenierten Kohlenwasserstoffe von Filtermaterialien mittels Wasserdampf zu desorbieren und das durch Kondensation des Desorbats gewonnene Flüssigkeitsgemisch effektiv zu trennen, sodass z.B. Reinstwasser (erste / obere Phase) und Inhalationsanästhetika (zweite / untere Phase zurückgewonnen werden können.

Gemäß einer Ausführungsform weist das System weiterhin eine Kühlvorrichtung zum Erzeugen des Flüssigkeitsgemisches durch Kondensation des Desorbats auf.

Gemäß einer weiteren Ausführungsform des Systems weist die Vorrichtung zur Desorption halogenierter Kohlenwasserstoffe ein Ventil zum Verschließen des Desorbatausgangs, einen Temperatursensor zum Ermitteln der Temperatur des Adsorbens und eine zweite Steuervorrichtung auf, wobei die zweite Steuervorrichtung dazu eingerichtet ist, das Ventil und die Einleitung von Wasserdampf, insbesondere trockenem Wasserdampf, in den Desorptionsbehälter über den Dampfeingang derart zu steuern, dass das Adsorbens bzw. das durch Adsorption mindestens eines Gases an das Adsorbens gebildete Sorbat, für mindestens 10 min, insbesondere 10 min bis 60 min, bei einer Temperatur von mehr als 120°C, insbesondere bei einer Temperatur von 121°C bis 150°Cb und bei einem Druck von 0,15 MPa bis 0,4 MPa, insbesondere bei einem Druck von 0,15 MPa bis 0,3 MPa, in Kontakt mit dem Wasserdampf bringbar ist, so dass die an dem Adsorbens adsorbierten halogenierten Kohlenwasserstoffe, also das Sorptiv, sterilisierbar sind bzw. ist.

In einer besonderen Ausführungsform ist die zweite Steuervorrichtung dazu eingerichtet, das Ventil und die Einleitung von Wasserdampf, insbesondere trockenem Wasserdampf, in den Desorptionsbehälter über den Dampfeingang derart zu steuern, dass das Adsorbens bzw. das durch Adsorption mindestens eines Gases an das Adsorbens gebildete Sorbat, für mindestens 20 min bis 40 min, insbesondere für ungefähr 30 min, bei einer Temperatur von 135°C bis 145°C und bei einem Druck von 0,24 MPa bis 0,26 MPa in Kontakt mit dem Wasserdampf bringbar ist, so dass die an dem Adsorbens adsorbierten halogenierten Kohlenwasserstoffe sterilisierbar sind.

Durch die Sterilisation des Sorbats können die durch Desorption und Trennung rückgewonnenen halogenierten Kohlenwasserstoffe ohne einen weiteren Sterilisationsschritt für medizinische Anwendungen, z.B. als Inhalationsanästhetika genutzt werden.

Durch die Kombination der Parameter Sterilisationszeit, -temperatur und -druck kann eine vollständige Inaktivierung aller im Sorbat befindlichen Pathogene gewährleistet werden.

Gleichzeitig sind die oben aufgeführten Parameter Sterilisationszeit, -temperatur und -druck insbesondere so gewählt, dass die adsorbierten halogenierten Kohlenwasserstoffe unter den herrschenden Bedingungen nicht zersetzt werden oder chemische Reaktionen eingehen, sodass die sterilisierten halogenierten Kohlenwasserstoffe nach der Desorption erneut verwendet werden können.

Während des Sterilisationsschrittes wird das Adsorbens insbesondere nicht von Wasserdampf durchströmt. Das Adsorbens wird insbesondere einmal, beim Einleiten des Wasserdampfes, vom Wasserdampf durchströmt und bleibt dann in einer Dampfatmosphäre bei Überdruck. Erst nach Abschluss des Sterilisationsschrittes wird das Adsorbens zur Desorption der halogenierten Kohlenwasserstoffe vom Wasserdampf durchströmt.

Gemäß einer weiteren Ausführungsform weist das System einen Dampfgenerator zur Erzeugung von Wasserdampf, insbesondere trockenem Wasserdampf, auf, wobei der Dampfgenerator mit dem Desorptionsbehälter in Strömungsverbindung bringbar ist, sodass der mittels des Dampfgenerators erzeugte Wasserdampf in den Desorptionsbehälter einleitbar ist. Dabei weist das System insbesondere eine Rückführleitung auf, die mit dem ersten Auslauf des Behälterraumes der Vorrichtung zum Trennen eines Flüssigkeitsgemisches und mit dem Dampfgenerator in Strömungsverbindung steht oder bringbar ist, sodass über den ersten Auslauf aus dem Behälterraum abgezogenes Wasser über die Rückführleitung dem Dampfgenerator zuführbar ist, um aus dem Wasser mittels des Dampfgenerators Wasserdampf zu erzeugen. Insbesondere steht die Rückführleitung über den Speicherbehälter der Vorrichtung zum Trennen eines Flüssigkeitsgemisches mit dem ersten Auslauf in Strömungsverbindung oder ist mit diesem in Strömungsverbindung bringbar. D.h., ein Ende der Rückführleitung mündet insbesondere den besagten Speicherbehälter.

Ein dritter Aspekt der Erfindung betrifft ein Verfahren zum Trennen eines Flüssigkeitsgemisches in eine erste Phase und eine zweite Phase mittels einer Vorrichtung nach dem ersten Aspekt der Erfindung, wobei die zweite Phase insbesondere eine größere Dichte aufweist als die erste Phase, die Vorrichtung so positioniert wird, dass die Längsachse vertikal verläuft, der erste Boden den Behälterraum nach unten hin begrenzt und der erste Auslauf entlang der Längsachse oberhalb des zweiten Auslaufes angeordnet ist, ein Flüssigkeitsgemisch durch den Einlauf in den ersten Teilraum des Behälterraumes eingeleitet wird, so dass sich das Flüssigkeitsgemisch in dem ersten Teilraum und dem zweiten Teilraum sammelt und in die erste Phase und die zweite Phase auftrennt, und wobei die erste Phase durch den ersten Auslauf aus dem Behälterraum abgezogen wird.

Dabei wird insbesondere ein direkter Strömungspfad zwischen dem ersten Einlauf und dem ersten Auslauf durch die Trennwand unterbrochen.

Gemäß einer Ausführungsform des Verfahrens wird ein Pegel des Flüssigkeitsgemisches in dem Behälterraum oder eine Position einer Phasengrenze zwischen der ersten Phase und der zweiten Phase ermittelt, insbesondere mittels der Messvorrichtung.

Gemäß einer weiteren Ausführungsform wird der Einlauf, der erste Auslauf und/oder der zweite Auslauf bei einer vordefinierten Position der Phasengrenze oder des Pegels, insbesondere mittels der ersten Steuervorrichtung, geöffnet oder verschlossen, insbesondere anhand des ermittelten Pegels des Flüssigkeitsgemisches oder anhand der ermittelten Position der Phasengrenze.

Gemäß einer weiteren Ausführungsform wird der Einlauf, der erste Auslauf und/oder der zweite Auslauf so geöffnet bzw. verschlossen, dass der Pegel oder die Position der Phasengrenze entlang der Längsachse oberhalb eines dem ersten Boden zugewandten ersten Randes der Trennwand und unterhalb eines dem ersten Boden abgewandten zweiten Randes der Trennwand steht.

Insbesondere werden dabei an dem Einlauf, dem ersten Auslauf und/oder dem zweiten Auslauf angeordnete Ventile geöffnet oder verschlossen.

Gemäß einer weiteren Ausführungsform wird eine Zulaufrate des Flüssigkeitsgemisches in den Behälterraum, eine erste Ablaufrate der ersten Phase aus dem Behälterraum und/oder eine zweite Ablaufrate der zweiten Phase aus dem Behälterraum, insbesondere mittels der ersten Steuervorrichtung, gesteuert, insbesondere anhand des ermittelten Pegels des Flüssigkeitsgemisches oder anhand der ermittelten Position der Phasengrenze.

Gemäß einer weiteren Ausführungsform wird die Zulaufrate, die erste Ablaufrate und/oder die zweite Ablaufrate so gesteuert, dass der Pegel oder die Position der Phasengrenze entlang der Längsachse oberhalb eines dem ersten Boden zugewandten ersten Randes der Trennwand und unterhalb eines dem ersten Boden abgewandten zweiten Randes der Trennwand steht.

Der Pegel des Flüssigkeitsgemisches ist dabei im Fall einer schon erfolgten Phasentrennung identisch mit dem Pegel der oberen Phase, insbesondere der ersten Phase.

Gemäß einer weiteren Ausführungsform des Verfahrens wird der Einlauf, der erste Auslauf und/oder der zweite Auslauf geöffnet bzw. verschlossen, wenn der Pegel des Flüssigkeitsgemisches oder die Position der Phasengrenze einen unteren Wert bzw. unteren Schaltpunkt unterschreitet.

Gemäß einer weiteren Ausführungsform wird ein (am Einlauf angeordnetes) erstes Ventil zu geöffnet und/oder ein (am zweiten Auslauf angeordnetes) zweites Ventil verschlossen oder gedrosselt, wenn der Pegel des Flüssigkeitsgemisches oder die Position der Phasengrenze einen unteren Wert bzw. unteren Schaltpunkt unterschreitet.

Gemäß einer weiteren Ausführungsform des Verfahrens wird die Zulaufrate erhöht und/oder die erste Ablaufrate oder die zweite Ablaufrate vermindert, wenn der Pegel des Flüssigkeitsgemisches oder die Position der Phasengrenze einen unteren Wert bzw. unteren Schaltpunkt unterschreitet.

Gemäß einer weiteren Ausführungsform weist die Trennwand in Richtung der Längsachse eine Höhe auf, wobei der untere Schaltpunkt oberhalb des unteren Zwanzigstels, insbesondere oberhalb des unteren Zehntels, der Höhe positioniert ist.

Gemäß einer weiteren Ausführungsform des Verfahrens wird der Einlauf, der erste Auslauf und/oder der zweite Auslauf geöffnet bzw. verschlossen, wenn der Pegel des Flüssigkeitsgemisches oder die Position der Phasengrenze einen oberen Wert bzw. oberen Schaltpunkt überschreitet.

Gemäß einer weiteren Ausführungsform wird ein (am Einlauf angeordnetes) erstes Ventil geschlossen oder gedrosselt und/oder ein (am zweiten Auslauf angeordnetes) zweites Ventil geöffnet, wenn der Pegel des Flüssigkeitsgemisches oder die Position der Phasengrenze einen oberen Wert bzw. oberen Schaltpunkt überschreitet.

Gemäß einer weiteren Ausführungsform des Verfahrens wird die Zulaufrate vermindert und/oder die erste Ablaufrate oder die zweite Ablaufrate erhöht, wenn der Pegel des Flüssigkeitsgemisches oder die Position der Phasengrenze einen oberen Wert bzw. oberen Schaltpunkt überschreitet.

Gemäß einer weiteren Ausführungsform weist die Trennwand in Richtung der Längsachse eine Höhe auf, wobei der obere Schaltpunkt unterhalb des oberen Zwanzigstels, insbesondere unterhalb des oberen Zehntels, der Höhe positioniert ist.

Die Erhöhung oder Verminderung der Zulauf- bzw. Ablaufraten kann z. B. durch die Steuerung entsprechender Drosselventile im Einlauf, ersten oder zweiten Auslauf oder in den damit verbundenen Flüssigkeitsleitungen erfolgen.

Die Position der Phasengrenze kann dabei in dem Fachmann bekannter Weise gemessen werden oder aus der Gesamtmenge des Flüssigkeitsgemisches, dem Mischungsverhältnis der beiden Phasen bzw. Komponenten des Flüssigkeitsgemisches und den Eigenschaften der entsprechenden Stoffe berechnet bzw. vorhergesagt werden.

Gemäß einer weiteren Ausführungsform des Verfahrens weist das Flüssigkeitsgemisch Wasser und einen halogenierten Kohlenwasserstoff, insbesondere Sevofluran, auf, wobei das Wasser die erste Phase bildet und der halogenierte Kohlenwasserstoff die zweite Phase bildet. Halogenierte Kohlenwasserstoffe wie Sevofluran (ein Inhalationsanästhetikum) lassen sich mithilfe von Wasserdampf von einem Filtermaterial desorbieren und können durch Trennung mittels der erfindungsgemäßen Vorrichtung zurückgewonnen werden.

Gemäß einer weiteren Ausführungsform umfasst oder ist der halogenierte Kohlenwasserstoff ein fluorhaltiges Inhalationsanästhetikum.

Gemäß einer weiteren Ausführungsform ist das fluorhaltige Inhalationsanästhetikum aus Sevofluran (CAS-Nr. 28523-86-6), Isofluran (CAS-Nr. 26675-46-7), Enfluran (CAS-Nr. 13838-16-9), Halothan (CAS-Nr. 151-67-7), Desfluran (CAS-Nr. 57041-67-5) oder Gemischen daraus ausgewählt.

Gemäß einer weiteren besonderen Ausführungsform ist das fluorhaltige Inhalationsanästhetikum Sevofluran.

Gemäß einer weiteren besonderen Ausführungsform ist das fluorhaltige Inhalationsanästhetikum ein Gemisch aus Sevofluran und Isolfluran.

Gemäß einer weiteren Ausführungsform des Verfahrens wird das Flüssigkeitsgemisch mittels Durchströmen eines adsorbierte halogenierte Kohlenwasserstoffe umfassenden Adsorbens bzw. Sorbats mit Wasserdampf in einem Desorptionsschritt unter Bildung eines Desorbats und anschließende Kühlung des Desorbats erzeugt.

Gemäß einer weiteren Ausführungsform ist das die halogenierten Kohlenwasserstoffe umfassende Adsorbens bzw. das Sorbat durch Filterung von Atemluft aus der Behandlung von Patienten erhalten, die mit den halogenierten Kohlenwasserstoffen narkotisiert wurden. Zur Desorption wird der Wasserdampf durch das Sorbat geleitet, sodass eine stetige Wasserdampfströmung durch das Sorbat eine Aufnahme der halogenierten Kohlenwasserstoffe in den Wasserdampf und somit deren Abtransport ermöglicht. Es bildet sich ein Gemisch aus Wasserdampf und halogenierten Kohlenwasserstoffen. Dieses Gemisch wird insbesondere von den mitgeführten Verunreinigungen befreit und insbesondere auf eine Temperatur von unter 30°C gebracht. Es bildet sich ein zweiphasiges Flüssigkeitsgemisch, das Kondensat. Aus diesem Kondensat werden die halogenierten Kohlenwasserstoffe mittels der erfindungsgemäßen Vorrichtung abgetrennt und ggf. weiterverarbeitet. Das abgetrennte Wasser kann in den Prozess zurückgeführt werden, d. h. aus dem Wasser kann Wasserdampf erzeugt werden, der erneut zur Desorption verwendet wird. Nach der Desorption der halogenierten Kohlenwasserstoffe wird das Sorptionsmittel insbesondere gekühlt das nun sorptivfreie Sorptionsmittel kann für weitere Ad-/Desorptionszyklen bereitgestellt werden.

Gemäß einer Ausführungsform des Verfahrens ist das Adsorbens, an dem die halogenierten Kohlenwasserstoffe adsorbiert werden bzw. adsorbierbar sind, Aktivkohle, insbesondere hydrophobe Aktivkohle, und oder Zeolith, insbesondere hydrophober Zeolith, insbesondere modifizierter hydrophober Zeolith.

Gemäß einer weiteren Ausführungsform ist das ein Adsorbens porös und weist Poren mit einer Größe bzw. einem Durchmesser im Bereich von 1 µm bis 999 µm oder 1 nm bis 999 nm auf.

Selbstverständlich kann statt dem Adsorbens auch ein Gemisch von mehreren Adsorbentien verwendet werden.

Gemäß einer weiteren Ausführungsform ist das Adsorbens vor der Absorption bzw. nach der Durchführung des gesamten Verfahrenszyklus und vor Einsatz zur Absorption von halogenierten Kohlenwasserstoffen durch einen Wassergehalt von ≤5 % (w/w), insbesondere durch einen Wassergehalt von ≤2 % (w/w) charakterisiert. Der Wassergehalt kann sich im Laufe des Verfahrens ändern.

Adsorbentien können sowohl hydrophil als auch hydrophob sein. Für das vorliegende Verfahren werden insbesondere hydrophobe Adsorbentien verwendet. Auch hydrophobe Adsorbentien können große Mengen Wasser aufnehmen. Eine Adsorption ist dabei nur an den nicht durch Wasser besetzten Stellen des Adsorbens möglich. Insbesondere soll das verwendete Adsorbens einen möglichst niedrigen Wassergehalt aufweisen, um möglichst viel halogenierte Kohlenwasserstoffe aufnehmen zu können. Nach der Desorption der halogenierten Kohlenwasserstoffe kann das Adsorbens einen Wassergehalt von über 30 % (w/w) aufweisen. Nach Entfernung eines Großteils des Wassers kann das Adsorbens wiederverwendet werden.

Gemäß einer weiteren Ausführungsform ist der in dem Desorptionsschritt verwendete Wasserdampf trockener Wasserdampf, d.h. der Wasserdampf enthält im Wesentlichen kein flüssiges Wasser. Insbesondere ist der in dem Desorptionsschritt verwendete Wasserdampf Reinstdampf, d.h. der Wasserdampf ist durch Verdampfen von vollentsalztem Wasser gebildet.

Gemäß einer weiteren Ausführungsform des Verfahrens wird das halogenierte Kohlenwasserstoffe umfassende Adsorbens, d.h. das Sorbat, in einem dem Desorptionsschritt vorangehenden Sterilisationsschritt für mindestens 10 min, insbesondere für 10 bis 60 min, bei einer Temperatur von mehr als 120°C, insbesondere bei einer Temperatur von 121°C bis 150°C, und bei einem Druck von 0,15 MPa bis 0,4 MPa, insbesondere bei einem Druck von 0,15 MPa bis 0,3 MPa in Kontakt mit Wasserdampf, insbesondere trockenem Wasserdampf, gebracht, so dass die halogenierten Kohlenwasserstoffe sterilisiert werden.

Gemäß einer besonderen Ausführungsform des Verfahrens wird das halogenierte Kohlenwasserstoffe umfassende Adsorbens, also das Sorbat, in einem dem Desorptionsschritt vorangehenden Sterilisationsschritt für 20 min bis 40 min, insbesondere für ungefähr 30 min, bei einer Temperatur von 135°C bis 145°C und bei einem Druck von 0,24 MPa bis 0,26 MPa in Kontakt mit Wasserdampf, insbesondere trockenem Wasserdampf, gebracht, so dass die halogenierten Kohlenwasserstoffe sterilisiert werden.

Durch die Kombination der Parameter Sterilisationszeit, -temperatur und -druck kann eine vollständige Inaktivierung aller im Sorbat befindlichen Pathogene gewährleistet werden.

Gleichzeitig sind die oben aufgeführten Parameter Sterilisationszeit, -temperatur und -druck insbesondere so gewählt, dass die adsorbierten halogenierter Kohlenwasserstoffe unter den herrschenden Bedingungen nicht zersetzt werden oder chemische Reaktionen eingehen, sodass die sterilisierten halogenierten Kohlenwasserstoffe nach der Desorption erneut verwendet werden können.

Während des Sterilisationsschrittes wird das Adsorbens insbesondere nicht von Wasserdampf durchströmt. Das Adsorbens wird insbesondere einmal, beim Einleiten des Wasserdampfes, vom Wasserdampf durchströmt und bleibt dann in einer Dampfatmosphäre bei Überdruck. Erst nach Abschluss des Sterilisationsschrittes wird das Adsorbens zur Desorption der halogenierten Kohlenwasserstoffe vom Wasserdampf durchströmt.

Gemäß einer weiteren Ausführungsform werden der Sterilisationsschritt und der Desorptionsschritt in derselben Anlage zeitlich direkt aufeinanderfolgend durchgeführt.

Im Folgenden werden weitere Details und Beispiele der Erfindung anhand von Zeichnungen beschrieben, aus denen weitere Ausführungsformen und Vorteile hervorgehen. Diese Beispiele sollen die Erfindung erläutern, jedoch nicht den Schutzumfang einschränken.
- Fig. 1: zeigt eine perspektivische Darstellung einer erfindungsgemäßen Vorrichtung zum Trennen eines Flüssigkeitsgemisches in eine erste Phase und eine zweite Phase gemäß einer ersten Ausführungsform mit einer Trennwand;
- Fig. 2: zeigt einen Längsschnitt einer erfindungsgemäßen Vorrichtung zum Trennen eines Flüssigkeitsgemisches mit Spalt zwischen Trennwand und erstem Boden;
- Fig. 3: zeigt einen Längsschnitt einer erfindungsgemäßen Vorrichtung zum Trennen eines Flüssigkeitsgemisches mit Öffnung in der Trennwand;
- Fig. 4: zeigt eine perspektivische Darstellung einer zweiten Ausführungsform einer erfindungsgemäßen Vorrichtung mit zwei Trennwänden;
- Fig. 5: zeigt eine perspektivische Darstellung einer dritten Ausführungsform einer erfindungsgemäßen Vorrichtung mit drei Trennwänden;
- Fig. 6: zeigt eine perspektivische Darstellung einer vierten Ausführungsform einer erfindungsgemäßen Vorrichtung mit einer rohrförmigen Trennwand;
- Fig. 7: zeigt eine Schnittdarstellung einer fünften Ausführungsform einer erfindungsgemäßen Vorrichtung mit einer rohrförmigen Trennwand, einem am Einlauf angeordneten Rohrstück und einem am ersten Auslauf angeordneten Abweiselement;
- Fig. 8: zeigt die in Fig. 5 dargestellte Vorrichtung im Querschnitt senkrecht zu der Längsachse;
- Fig. 9: zeigt eine perspektivische Darstellung einer Vorrichtung zur Desorption halogenierter Kohlenwasserstoffe als Teil des erfindungsgemäßen Systems;
- Fig. 10: zeigt eine perspektivische Darstellung eines Adsorbentienbehälters einer Vorrichtung zur Desorption halogenierter Kohlenwasserstoffe;
- Fig. 11: zeigt schematisch den Aufbau einer Rückgewinnungsanlage für halogenierte Kohlenwasserstoffe unter Verwendung eines erfindungsgemäßen Systems.

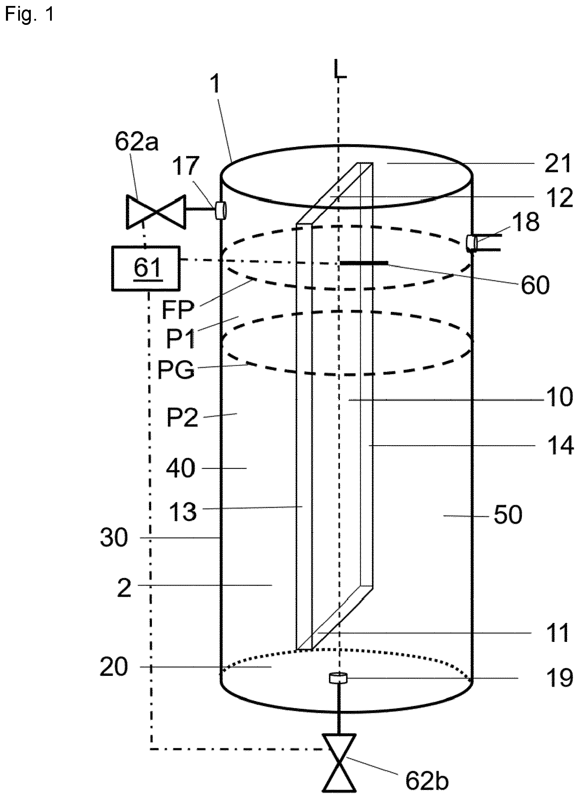

Die Fig. 1 zeigt in perspektivischer Ansicht eine Vorrichtung 1 zum Trennen eines Flüssigkeitsgemisches in eine erste Phase P1 und eine zweite Phase P2 gemäß der vorliegenden Erfindung. Die Vorrichtung 1 weist einen im Wesentlichen kreiszylinderförmigen Mantel 30 auf, der entlang einer Längsachse L erstreckt ist, wobei die Längsachse L die Zylindermittelachse bildet. Der Mantel 30 verläuft in Umfangsrichtung bezüglich der Längsachse L und ist im Querschnitt senkrecht zu der Längsachse L kreisförmig. Der Mantel 30 umschließt einen Behälterraum 2 der Vorrichtung 1.

Wie aus Fig. 1 ersichtlich ist, weist die Vorrichtung 1 weiterhin einen ersten Boden 20 und einen zweiten Boden 21 auf, wobei der erste Boden 20 und der zweite Boden 21 den Behälterraum 2 stirnseitig begrenzen. Der erste Boden 20 und der zweite Boden 21 verlaufen senkrecht zu der Längsachse L.

Beim bestimmungsgemäßen Gebrauch ist die Vorrichtung 1 insbesondere so angeordnet, dass die Längsachse L vertikal verläuft und der erste Boden 20 den Behälterraum 2 nach unten hin abschließt.

In dem Behälterraum 2 ist außerdem eine entlang der Längsachse L verlaufende Trennwand 10 angeordnet. Die Trennwand 10 weist einen ersten Rand 11 und einen zweiten Rand 12 auf, wobei beide Ränder 11, 12 senkrecht zu der Längsachse L verlaufen. Der erste Rand 11 ist dabei im Bereich des ersten Bodens 20 angeordnet und der zweite Rand 12 ist im Bereich des zweiten Bodens 21 angeordnet. Dabei kann der erste Rand 11 direkt an den ersten Boden 20 angrenzen oder der erste Rand 11 kann wie in Fig. 1 gezeigt von dem ersten Boden 20 beabstandet sein. Ebenso kann der zweite Rand 12 direkt an den zweiten Boden 21 angrenzen oder der zweite Rand 12 kann von dem zweiten Boden 21 beabstandet sein.

Weiterhin weist die Trennwand 10 einen dritten Rand 13 und einen vierten Rand 14 auf, wobei der dritte Rand 13 und der vierte Rand 14 direkt mit der Innenoberfläche des Mantels 30 in fluiddichtem Kontakt stehen. Der dritte Rand 13 und der vierte Rand 14 können z.B. mit dem Mantel 30 verschweißt sein oder können über eine Dichtung mit dem Mantel 30 in Kontakt stehen.

Die Trennwand 10 teilt den Behälterraum 2 in einen ersten Teilraum 40 und einen zweiten Teilraum 50 auf.

An dem Mantel 30 der Vorrichtung 1 ist ein Einlauf 17 vorgesehen, d. h. der Mantel 30 weist an dieser Stelle eine Öffnung auf, an der z.B. ein Stutzen angeordnet sein kann. Über den Einlauf 17 kann ein Flüssigkeitsgemisch in den Behälterraum 2 eingeleitet werden, z.B. über eine mit dem Einlauf 17 strömungstechnisch verbundene Flüssigkeitsleitung. Der Einlauf 17 kann ständig geöffnet sein oder z.B. über ein erstes Ventil 62a verschließbar ausgebildet sein. In dem in Fig. 1 gezeigten Ausführungsbeispiel ist der Einlauf 17 beim bestimmungsgemäßen Gebrauch der Vorrichtung 1 am oberen Ende des Behälterraums 2 angeordnet. Der Einlauf 17 mündet in den ersten Teilraum 40.

Weiterhin weist die Vorrichtung 1 einen ersten Auslauf 18 auf, der in den zweiten Teilraum 50 mündet und in dem in Fig. 1 gezeigten Ausführungsbeispiel gegenüber dem Einlauf 17 auf einer etwas geringeren Höhe entlang der Längsachse L als der Einlauf 17 angeordnet ist. Der erste Auslauf 18 ist ebenfalls durch eine Öffnung des Mantels 30 gebildet, an der ein Stutzen angeordnet sein kann, und ist insbesondere mit einer weiteren Flüssigkeitsleitung verbunden. Auch der erste Auslauf 18 kann offen oder z.B. über ein Ventil (nicht gezeigt) verschließbar ausgebildet sein.

Wie aus Fig. 1 ersichtlich ist, schneidet eine zwischen dem Einlauf 17 und dem ersten Auslauf 18 verlaufende gedachte gerade Linie die Trennwand 10, d.h. ein direkter Strömungspfad zwischen dem Einlauf 17 und dem ersten Auslauf 18 ist durch die Trennwand 10 unterbrochen. Dies führt dazu, dass durch den Einlauf 17 in den Behälterraum 2 eingeleitetes Flüssigkeitsgemisch den Behälterraum 2 nicht auf direktem Wege durch den ersten Auslauf 18 verlassen kann.

In der Fig. 1 ist weiterhin ein zweiter Auslauf 19 erkennbar, der durch eine in dem ersten Boden 20 vorgesehene Öffnung sowie einen optionalen Stutzen gebildet ist. An den zweiten Auslauf 19 kann eine Flüssigkeitsleitung strömungstechnisch gekoppelt sein. Außerdem kann der zweite Auslauf 19 offen oder verschließbar (z.B. durch ein zweites Ventil 62b) ausgestaltet sein. Alternativ zu der in Fig. 1 gezeigten Ausführungsform kann der zweite Auslauf 19 natürlich auch an dem Mantel 30, also an der Seitenwand der Vorrichtung 1, angeordnet sein. In diesem Fall ist der zweite Auslauf 19 entlang der Längsachse L unterhalb des ersten Auslaufs 18 an dem Mantel 30 positioniert.

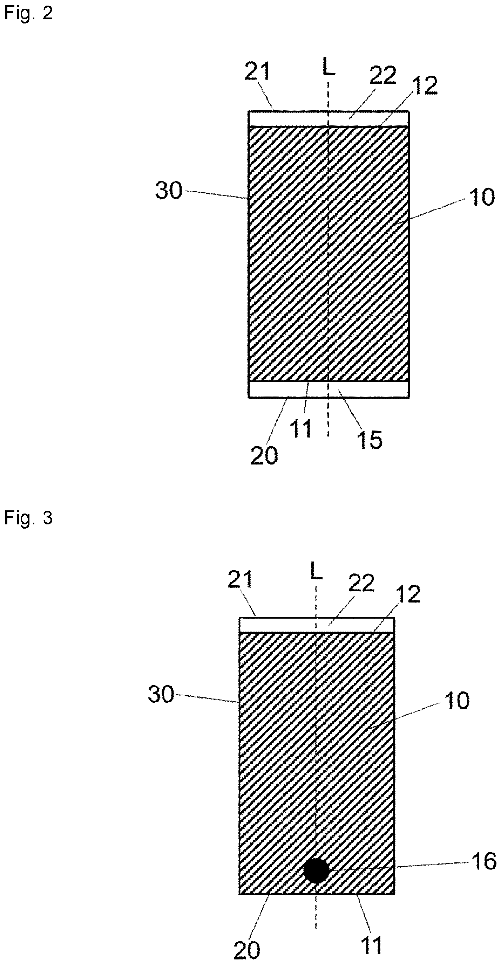

Der erste Teilraum 40 und der zweite Teilraum 50 stehen im beim bestimmungsgemäßen Betrieb der Vorrichtung 1 unteren Bereich, also im Bereich des ersten Bodens 20, miteinander in Strömungsverbindung, sodass sich der Pegel FP des in dem Behälterraum 2 befindlichen Flüssigkeitsgemisches bzw. aus den aus dem Flüssigkeitsgemisch gebildeten getrennten ersten und zweiten Phasen P1, P2, zwischen dem ersten Teilraum 40 und dem zweiten Teilraum 50 ausgleichen kann. Diese Strömungsverbindung kann z.B. wie in den Figuren 2 und 3 dargestellt realisiert sein. Diese Figuren zeigen jeweils einen Längsschnitt der erfindungsgemäßen Vorrichtung 1 durch die Ebene der Trennwand 10.

Die Fig. 2 zeigt ein Ausführungsbeispiel der Trennwand 10, das der in Fig. 1 gezeigten Ausführungsform entspricht. Dabei ist die Trennwand 10 von dem ersten Boden 20 beanstandet, sodass zwischen dem ersten Boden 20 und dem unteren ersten Rand 11 der Trennwand 10 ein erster Spalt 15 vorgesehen ist. Über diesen ersten Spalt 15 steht der erste Teilraum 40 mit dem zweiten Teilraum 50 in Strömungsverbindung (siehe Fig. 1). Optional kann wie in Fig. 2 gezeigt auch der obere zweite Rand 12 der Trennwand 10 von dem benachbarten zweiten Boden 21 beanstandet sein, sodass sich ein zweiter Spalt 22 ausbildet.

In der Fig. 3 ist eine alternative Ausführung der Trennwand 10 dargestellt, bei der untere erste Rand 11 der Trennwand 10 in direktem Kontakt mit dem ersten Boden 20 steht und die Trennwand 10 angrenzend an den unteren ersten Rand 11 eine Öffnung 16 aufweist, über die der erste Teilraum 40 mit dem zweiten Teilraum 50 in Strömungsverbindung steht.

Beim erfindungsgemäßen Betrieb der Vorrichtung 1 wird durch den Einlauf 17 ein Flüssigkeitsgemisch in den Behälterraum 2 eingeleitet. Bei dem Flüssigkeitsgemisch kann es sich z.B. um eine Mischung aus einem halogenierten Kohlenwasserstoff und Wasser handeln, die beispielsweise durch Desorption des halogenierten Kohlenwasserstoffs von einem Adsorbens mittels Wasserdampf erhalten wurde.

Dadurch dass die Trennwand 10 in dem Behälterraum 2 den direkten Strömungspfad zwischen dem Einlauf 17 und dem ersten Auslauf 18 unterbricht, kann das Flüssigkeitsgemisch den Behälterraum 2 nicht direkt wieder durch den ersten Auslauf 18 verlassen, sondern läuft in dem ersten Teilraum 40 unter Wirkung der Schwerkraft hinab bis zum ersten Boden 20 und tritt über die Strömungsverbindung zwischen dem ersten Teilraum 40 und dem zweiten Teilraum 50, d. h. über den Spalt 15 (Fig. 2) oder die Öffnung 16 (Fig. 3), in den zweiten Teilraum 50 ein. Anschließend trennt sich das Flüssigkeitsgemisch in dem Behälterraum 2 unter Wirkung der Schwerkraft in eine erste Phase P1 (insbesondere eine obere Phase geringerer Dichte) und eine zweite Phase P2 (insbesondere eine untere Phase höherer Dichte) auf, wobei sich zwischen der ersten Phase P1 und der zweiten Phase P2 eine Phasengrenze PG ausbildet.

Wenn der Pegel FP der ersten Phase P1 eine ausreichende Höhe in dem Behälterraum 2 erreicht hat, kann die erste Phase P1 über den ersten Auslauf 18 aus dem Behälterraum 2 abgezogen werden. Die zweite Phase P2 kann über den zweiten Auslauf 19 aus dem Behälterraum 2 abgezogen werden.

Ferner ist in Fig. 1 eine Messvorrichtung 60 zum Ermitteln eines Pegels FP des Flüssigkeitsgemisches in dem Behälterraum 2 abgebildet. Diese Messvorrichtung 60 kann als Schwimmer ausgebildet sein oder einen Schwimmer aufweisen, der auf der Flüssigkeitsoberfläche des Flüssigkeitsgemisches bzw. der oberen Phase schwimmt. Die Messvorrichtung 60 ist über eine elektrische Verbindung oder Datenverbindung (in Fig. 1 durch eine Strich-Punkt-Linie dargestellt) mit einer ersten Steuervorrichtung 61 zum Öffnen und/oder Verschließen bzw. Drossel der Ventile 62a, 62b oder zum Steuern einer Zulaufrate des Flüssigkeitsgemisches in den Behälterraum 2, einer ersten Ablaufrate der ersten Phase P1 aus dem Behälterraum 2 und/oder einer zweiten Ablaufrate der zweiten Phase P2 aus dem Behälterraum 2 verbunden. Die erste Steuervorrichtung 61 erhält über die elektrische Verbindung oder die Datenverbindung Signale der Messvorrichtung 60 und öffnet bzw. schließt anhand der Signale das erste Ventil 62a und/oder das zweite Ventil 62b oder steuert anhand der Signale die Zulaufrate, die erste Ablaufrate und/oder die zweite Ablaufrate derart, dass der Pegel FP des Flüssigkeitsgemisches bzw. die Phasengrenze PG zwischen der ersten Phase P1 und der zweiten Phase P2 entlang der Längsachse L oberhalb des ersten Randes 11 der Trennwand 10 und unterhalb des zweiten Randes 12 der Trennwand 10 steht.

Die Phasengrenze PG zwischen der ersten Phase P1 und der zweiten Phase P2 kann sich bei Beginn der Einleitung des Flüssigkeitsgemisches z.B. zwischen dem ersten Boden 11 und einem oberen Schaltpunkt, insbesondere ca. 5 cm unter dem oberen zweiten Rand 12 der Trennwand 10 bewegen. Beim Erreichen des oberen Schaltpunktes wird die Vorrichtung 1 (bzw. der Behälterraum 2) insbesondere bis zum Erreichen eines unteren Schaltpunktes, insbesondere ca. 5 cm oberhalb des ersten Bodens 11, entleert. Während des weiteren Betriebs befindet sich die Phasengrenze PG insbesondere zwischen dem oberen Schaltpunkt und dem unteren Schaltpunkt.

In einer beispielhaften Ausführung beträgt die Höhe der in Fig. 1 gezeigten Vorrichtung 1 zwischen dem ersten Boden 11 und dem zweiten Boden 12 entlang der Längsachse L ca. 60 bis 70 cm und der Querschnittsdurchmesser des kreisförmigen Mantels 30 liegt bei ca. 30 cm. Der Behälterraum 2 kann zwischen dem unteren Schaltpunkt und dem oberen Schaltpunkt insbesondere eine Menge von ca. 20 I Flüssigkeitsgemisch aufnehmen. Der Einlauf 17 sowie der erste Auslauf 18 und der zweite Auslauf 19 haben gemäß dem Beispiel jeweils einen Durchmesser von ca. 25 mm bis 30 mm. Der Einlauf 17 befindet sich insbesondere entlang der Längsachse L ca. 2 bis 3 cm unterhalb des zweiten Bodens 21 der Vorrichtung 1. Der erste Auslauf 17 ist insbesondere entlang der Längsachse 7 cm bis 8 cm unterhalb des Einlaufs 17 angeordnet, aber auf der gegenüberliegenden Seite. Der zweite Auslauf 19 ist insbesondere am tiefsten Punkt des ersten Bodens 21 positioniert. Die Trennwand 10 teilt den Behälterraum 2 insbesondere in zwei ungleich große Teilräume 40, 50 auf. Dabei ist insbesondere der erste Teilraum 40 kleiner als der zweite Teilraum 50, insbesondere da sich in der gedachten Mittellinie des Behälterraums die Messvorrichtung 60 für den Pegel des Flüssigkeitsgemisches, insbesondere ein Entleerungsschalter mit Schwimmer, befinden kann.

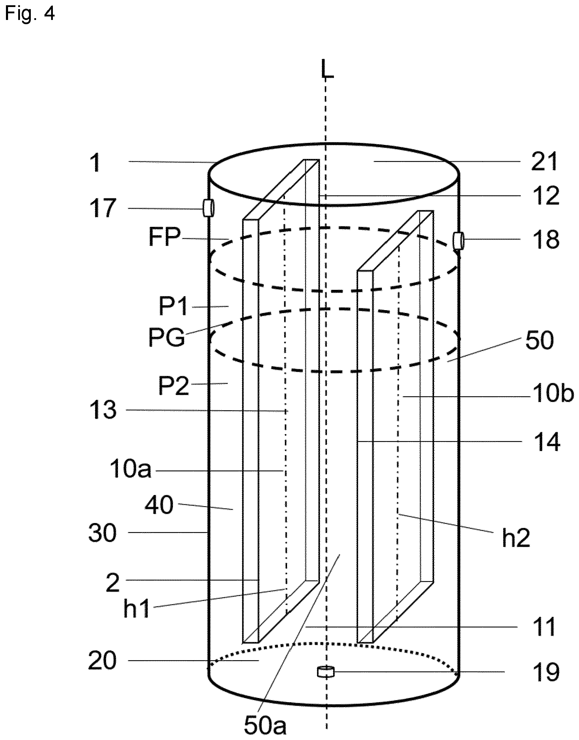

Die Fig. 4 zeigt eine weitere, alternative Ausführungsform der erfindungsgemäßen Vorrichtung 1. Diese ist analog zu der in Fig. 1 gezeigten Vorrichtung 1 ausgeführt, weist aber eine erste Trennwand 10a und eine zweite Trennwand 10b auf, die den Behälterraum 2 in einen ersten Teilraum 40, einen zweiten Teilraum 50 sowie einen weiteren, dritten Teilraum 50a aufteilen. Der dritte Teilraum 50a befindet sich zwischen dem ersten Teilraum 40 und dem zweiten Teilraum 50.

Die erste Trennwand 10a und die zweite Trennwand 10b sind jeweils entlang einer Fläche erstreckt, die parallel zu der Längsachse L verläuft. Die erste Trennwand 10a verläuft dabei parallel zu der zweiten Trennwand 10b. Die erste Trennwand 10a weist entlang der Längsachse L eine erste Höhe h1 auf und die zweite Trennwand 10b weist entlang der Längsachse L eine zweite Höhe h2 auf, wobei die erste Höhe h1 der ersten Trennwand 10a größer ist als die zweite Höhe h2 der zweiten Trennwand 10b. Somit sind die Trennwände 10a, 10b vom Einlauf 17 aus betrachtet kaskadenartig angeordnet, so dass das Flüssigkeitsgemisch zwischen dem zweiten Teilraum 50 und dem dritten Teilraum 50a bei einem niedrigeren Pegel FP überläuft als zwischen dem ersten Teilraum 40 und dem dritten Teilraum 50a.

Die Trennwände 10a, 10b können insbesondere jeweils wie in Fig. 2 oder Fig. 3 ausgeformt sein, d.h. sie können von dem ersten Boden 20 beabstandet sein, so dass ein jeweiliger erster Spalt 15 zwischen dem ersten Boden 20 und der jeweiligen Trennwand 10a, 10b gebildet ist, oder die Trennwände 10a, 10b können Öffnungen 16 aufweisen.

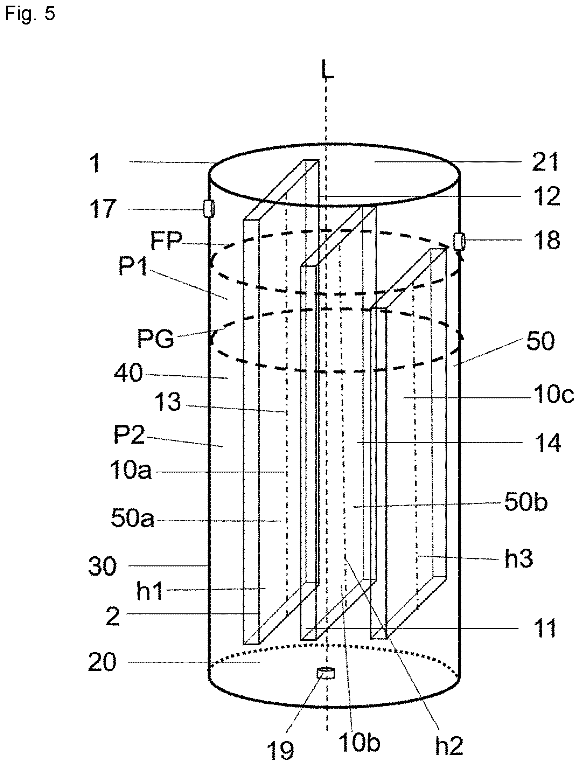

In Fig. 5 ist eine weitere Ausführungsform der erfindungsgemäßen Vorrichtung 1 gezeigt. Diese ist ebenfalls analog zu der in Fig. 1 gezeigten Ausführungsform ausgebildet, weist aber im Unterschied zu dieser insgesamt drei Trennwände, nämlich eine erste Trennwand 10a, eine zweite Trennwand 10b und eine dritte Trennwand 10c auf. Diese teilen den Behälterraum 2 in einen ersten Teilraum 40, einen zweiten Teilraum 50, einen dritten Teilraum 50a sowie einen vierten Teilraum 50b auf. Der dritte Teilraum 50a befindet sich zwischen dem ersten Teilraum 40 und dem vierten Teilraum 50b und der vierte Teilraum 50b ist zwischen dem zweiten Teilraum 50 und dem dritten Teilraum 50a angeordnet.

Die erste Trennwand 10a, die zweite Trennwand 10b und die dritte Trennwand 10c sind jeweils entlang einer Fläche erstreckt, die parallel zu der Längsachse L verläuft. Die erste Trennwand 10a verläuft dabei parallel zu der zweiten Trennwand 10b und der dritten Trennwand 10c. Die erste Trennwand 10a weist entlang der Längsachse L eine erste Höhe h1 auf, die zweite Trennwand 10b weist entlang der Längsachse L eine zweite Höhe h2 auf und die dritte Trennwand 10c weist entlang der Längsachse L eine dritte Höhe h3 auf, wobei die erste Höhe h1 der ersten Trennwand 10a größer ist als die zweite Höhe h2 der zweiten Trennwand 10b, und wobei die zweite Höhe h2 der zweiten Trennwand 10b größer ist als die dritte Höhe h3 der dritten Trennwand 10c. Somit sind die Trennwände 10a, 10b, 10c vom Einlauf 17 aus betrachtet kaskadenartig angeordnet, so dass das Flüssigkeitsgemisch zwischen dem vierten Teilraum 50b und dem zweiten Teilraum 50 bei einem niedrigeren Pegel FP überläuft als zwischen dem dritten Teilraum 50a und dem vierten Teilraum 50b, und so dass das Flüssigkeitsgemisch zwischen dem dritten Teilraum 50a und dem vierten Teilraum 50b bei einem niedrigeren Pegel FP überläuft als zwischen dem ersten Teilraum 40 und dem dritten Teilraum 50a.

Die Trennwände 10a, 10b, 10c können insbesondere jeweils wie in Fig. 2 oder Fig. 3 ausgeformt sein, d.h. sie können von dem ersten Boden 20 beabstandet sein, so dass ein jeweiliger erster Spalt 15 zwischen dem ersten Boden 20 und der jeweiligen Trennwand 10a, 10b gebildet ist, oder die Trennwände 10a, 10b können Öffnungen 16 aufweisen.

Die vorliegende Erfindung umfasst in analoger Weise zu den in Fig. 4 und 5 gezeigten Ausführungsformen auch Weiterbildungen der Vorrichtung 1 mit mehr als drei, insbesondere kaskadenartig angeordneten Trennwänden.

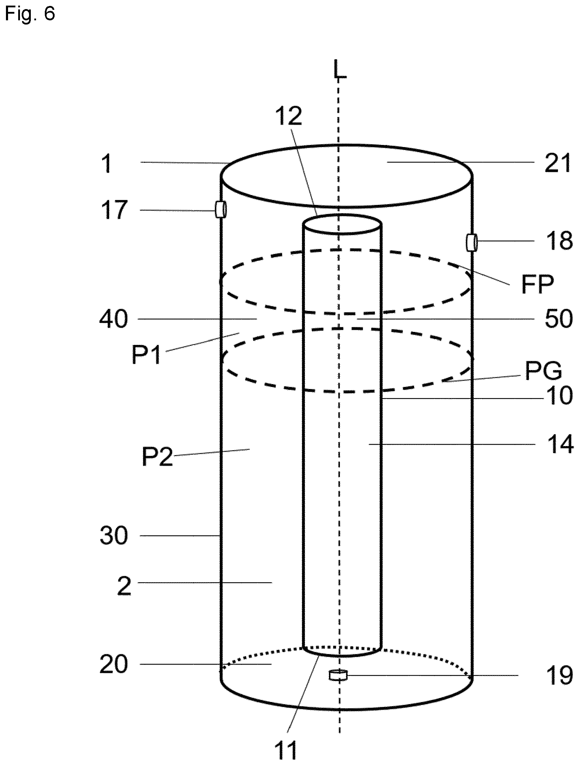

Fig. 6 stellt schematisch eine weitere Ausführungsform der Vorrichtung 1 mit einer rohrförmig innerhalb des Behälterraums 2 angeordneten Trennwand 10 dar. Die Trennwand 10 ist also bezüglich der Längsachse L in Umfangsrichtung umlaufend und geschlossen. In dem in Fig. 6 dargestellten Beispiel ist die rohrförmige Trennwand konzentrisch zu dem zylindrischen Mantel 30 angeordnet, das heißt, die Trennwand 10 und der Mantel 30 haben eine gemeinsame Zylindermittelachse (hier die Längsachse L). Es sind aber auch andere Ausführungsformen denkbar, bei denen die rohrförmige Trennwand 10 zu der Längsachse L versetzt angeordnet ist. Entlang der ersten Längsachse L ist die rohrförmige Trennwand offen, d.h. sie weist eine dem ersten Boden 20 zugewandte untere Öffnung und eine insbesondere dem zweiten Boden 21 zugewandte obere Öffnung auf.

Die rohrförmige Trennwand 10 teilt den Behälterraum 2 in einen außerhalb der Trennwand 10 angeordneten ersten Teilraum 40 und einen innerhalb der Trennwand angeordneten zweiten Teilraum 50 auf.

Weiterhin ist die rohrförmige Trennwand 10 von dem ersten Boden 20 beabstandet, sodass analog zu der in Fig. 2 gezeigten Ausführungsform der Trennwand 10 ein erster Spalt zwischen dem ersten Boden 20 und der Trennwand 10 gebildet ist. Dieser erste Spalt ist insbesondere so bemessen, dass sich in dem zweiten Teilraum 50 stets eine Schicht der ersten (oberen) Phase P1 über der zweiten (unteren) Phase P2 bilden kann. Dies verhindert im Falle einer leicht flüchtigen zweiten Phase P2 (wie z.B. einem halogenierten Inhalationsanästhetikum wie Sevofluran oder Isofluran), dass die zweite Phase P2 im zweiten Teilraum 50 ausgast. Z.B. kann der Abstand zwischen dem ersten Boden 20 und dem unteren Ende der rohrförmigen Trennwand 10 mindestens 1-2 cm betragen. In dem Ausführungsbeispiel der Fig. 6 ist das untere Ende der rohrförmigen Trennwand 10 beim bestimmungsgemäßen Gebrauch der Vorrichtung 1 direkt über dem zweiten Auslauf 19 angeordnet.

Selbstverständlich können in dem Behälterraum 2 auch mehrere rohrförmige Trennwände 10 vorgesehen sein, um weitere Teilräume des Behälterraumes 2 zu bilden. Diese können z.B. nebeneinander (und parallel zueinander) in dem Behälterraum 2 oder konzentrisch ineinander angeordnet sein. Weiterhin ist es denkbar, rohrförmige Trennwände mit den in Fig. 1, 4 und 5 gezeigten flächigen Trennwänden innerhalb eines Behälterraumes 2 zu kombinieren.

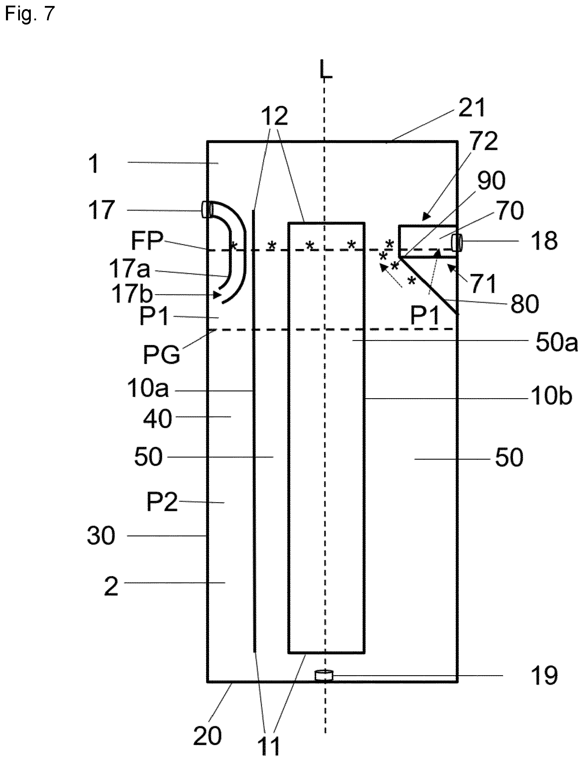

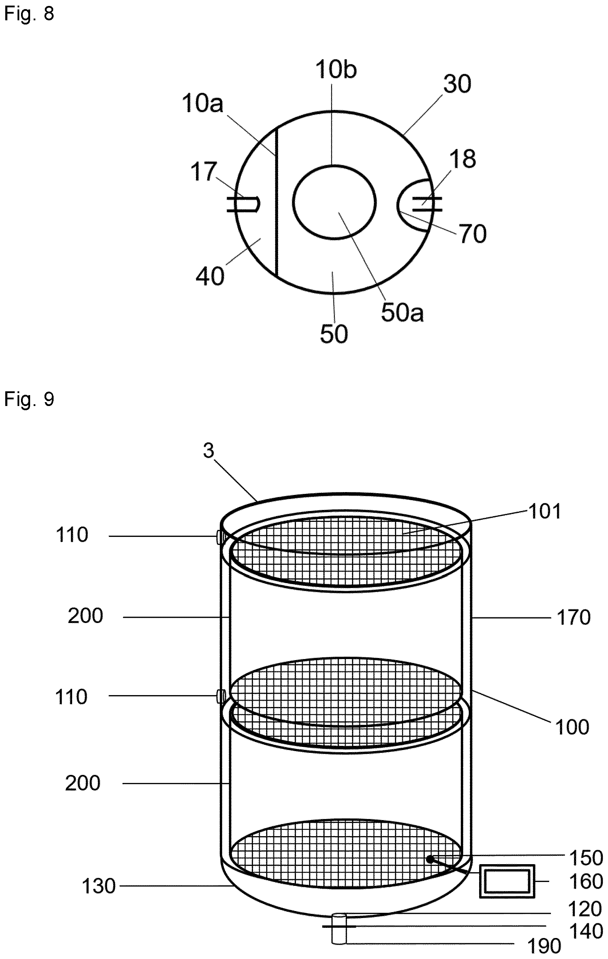

In den Figuren 7 und 8 ist ein weiteres Ausführungsbeispiel der erfindungsgemäßen Vorrichtung 1 gezeigt. Dabei ist Fig. 7 eine Schnittdarstellung parallel zu der Längsachse L und Fig. 8 ist eine Schnittdarstellung senkrecht zu der Längsachse L.

Die Vorrichtung 1 gemäß Fig. 7 und 8 ist analog zu der in Fig. 6 gezeigten Ausführungsform ausgebildet, weist also eine von dem ersten Boden 20 beabstandete rohrförmige Trennwand 10 auf. Zusätzlich weist die Vorrichtung ein mit dem Einlauf 17 strömungsverbundenes Rohrstück 17a mit einer Ausströmöffnung 17b auf. Das Rohrstück 17a ist derart gebogen, dass die Ausströmöffnung 17b dem Mantel 30 der Vorrichtung 1 zugewandt ist. Somit strömt das über den Einlauf 17 zur Verfügung gestellte Flüssigkeitsgemisch durch das Rohrstück 17a gegen den Mantel 30 und kann über den Mantel 30 ablaufen, was verhindert, dass noch nicht ausreichend in die Phasen P1, P2 getrenntes Flüssigkeitsgemisch zu dem ersten Auslauf 18 gelangt und verhindert eine ungewünschte weitere Durchmischung des Flüssigkeitsgemisches, da dieses über den Mantel 30 kontrolliert ablaufen kann. Dadurch wird die Trennwirkung der Vorrichtung 1 verbessert.

Weiterhin weist die Vorrichtung nach Fig. 7 und Fig. 8 ein an dem ersten Auslauf 18 positioniertes Abweiselement 70 und ein an dieses angrenzendes Leitelement 80 auf. Wie sich aus der Darstellung der Fig. 8 ergibt, weist das Abweiselement 70 im Querschnitt senkrecht zu der Längsachse eine U-Form auf. Die offenen Enden des U-Profils sind insbesondere flüssigkeitsdicht mit dem Mantel 30 verbunden, z.B. verschweißt oder über Dichtungen verbunden.

Das Abweiselement 70 trennt in der Querrichtung (senkrecht zu der Längsachse L den ersten Auslauf 18 von dem Behälterraum 2 (s. Fig. 8). Aus Fig. 7 ist zudem ersichtlich, dass das Abweiselement 70 in der Längsrichtung entlang der Längsachse L den ersten Auslauf 18 überdeckt.

Somit verhindert das Abweiselement 70, dass Verunreinigungen wie Partikel 90 oder Tropfen der zweiten (unteren) Phase P2, welche in der oberen ersten Phase P1 vorhanden sind, durch den ersten Auslauf 18 aus dem Behälterraum 2 herausgelangen.

Damit die obere erste Phase P1 durch den ersten Auslauf 18 abgezogen werden kann, ist das Abweiselement 70 entlang der Längsachse L zu dem umliegenden Behälterraum 2 hin offen, das heißt, das Abweiselement 70 weist (beim bestimmungsgemäßen Gebrauch) nach unten hin eine erste Öffnung 71 und nach oben hin eine zweite Öffnung 72 auf.

Weiterhin ist benachbart zu der ersten Öffnung 71 des Abweiselementes 70 ein optionales flächiges Leitelement 80 vorgesehen, dass Partikel 90 oder Tropfen der zweiten Phase P2 vom Mantel 30 aus zur Mitte des Behälterraumes 2 leitet, so dass diese nicht durch die untere erste Öffnung 71 in das Innere des Abweiselements 70 und somit in den ersten Auslauf 18 gelangen. Das Leitelement 80 ist in Umfangsrichtung bezüglich der Längsachse L geöffnet, so dass Flüssigkeit an dem Leitelement 80 vorbei durch das Abweiselement 70 zum ersten Auslauf 18 fließen kann.

Selbstverständlich können das Rohrstück 17a und das Abweiselement 70 (ggf. mit Leitelement 80) auch unabhängig voneinander verwendet werden, d.h. eine erfindungsgemäße Vorrichtung kann auch nur das Rohrstück 17a oder nur das Abweiselement 70 aufweisen.

Weiterhin können das Rohrstück 17a und das Abweiselement 70 (ggf. mit Leitelement 80) natürlich auch mit flächigen Trennwänden 10 (also den Ausführungsformen der Fig. 1, 4 und 5) kombiniert werden, und zwar sowohl einzeln als auch in Kombination miteinander.

In Fig. 9 ist eine Vorrichtung 3 zur Desorption halogenierter Kohlenwasserstoffe gezeigt, die gemäß der Erfindung ein System mit der oben beschriebenen Vorrichtung 1 zum Trennen eines Flüssigkeitsgemisches bilden kann.

Fig. 9 zeigt in einer perspektivischen Ansicht einen Desorptionsbehälter 100, der eine umlaufende Desorptionsbehälterwand 170 und einen mit der Desorptionsbehälterwand 170 abschließenden Desorptionsbehälterboden 130, zwei Dampfeingänge 110 zum Einlass von Wasserdampf in den Desorptionsbehälter 100 und einen am Desorptionsbehälterboden 130 angeordneten Desorbatausgang 120 zum Abführen von Wasserdampf bzw. Desorbat aus dem Desorptionsbehälter aufweist. Am Desorbatausgang 120 ist ein Ventil 140 angeordnet. Dieses Ventil 140 ist dazu eingerichtet, eine stromabwärts an den Desorbatausgang 120 anschließende Ausleitung 190 zu öffnen oder zu verschließen. Der Desorptionsbehälter 100 weist insbesondere einen gewölbten Boden 130, z. B. einen Klöpperboden nach DIN 28011, auf. Der Boden 130 ist dazu eingerichtet, während des Sterilisationsschrittes kondensierte Anteile aufzunehmen. Der Desorptionsbehälter 100 ist insbesondere bis 0,4 MPa druckstabil.

Bei dem erfindungsgemäßen System aus der Vorrichtung 3 zur Desorption eines halogenierten Kohlenwasserstoffes und der Vorrichtung 1 zum Trennen eines Flüssigkeitsgemisches ist die besagte Ausleitung 190 der Vorrichtung 3 zur Desorption eines halogenierten Kohlenwasserstoffes mit dem Einlauf 17 der Vorrichtung 1 zum Trennen eines Flüssigkeitsgemisches in Strömungsverbindung bringbar.

Das Ventil 140 ist insbesondere druckstabil bis mindestens zu einem Druck von 0,4 MPa verschließbar und dazu eingerichtet, den Druck innerhalb des Desorptionsbehälters 100 zu beeinflussen. Ist das Ventil 140 geschlossen, ermöglicht es einen Druckaufbau innerhalb des Desorptionsbehälters 100. Der Desorbatausgang 120 ist bei geschlossenem Ventil 140 versperrt. Ist das Ventil 140 geöffnet, kann ein Volumenstrom den Desorptionsbehälter 100 über den Desorbatausgang 120 verlassen.

In dem Desorptionsbehälter 100 sind zwei, insbesondere entnehmbare, Adsorbentienbehälter 200 zur Aufnahme eines z.B. als Schüttgut ausgebildeten Adsorbens 101 übereinander angeordnet. Die Dampfeingänge 110 sind oberhalb der entnehmbaren Adsorbentienbehälter 200 angeordnet. Zwischen dem Desorbatausgang 120 und dem unteren Adsorbentienbehälter 200 ist, insbesondere unmittelbar unterhalb des unteren Adsorbentienbehälters 200, ein Temperatursensor 150 angeordnet, welcher auf der dem Desorbatausgang 120 zugewandten Seite und damit auf der dem Dampfeingang 110 abgewandten Seite des Adsorbentienbehälters 200 angeordnet ist. Der Temperatursensor 150 ist mit einer zweiten Steuervorrichtung 160 zum Steuern der Dampfeingänge 110 und/oder des Ventils 140 verbunden. Die zweite Steuervorrichtung 160 ist dazu ausgebildet ist, das Ventil 140 nach Erreichen einer Zieltemperatur und/oder nach Ablauf einer vorgewählten Zeitspanne von 10 bis 60 min, während derer die Zieltemperatur gehalten wird, zu öffnen. Die zweite Steuervorrichtung 160 kann sich auch außerhalb des Desorptionsbehälters 100 befinden.

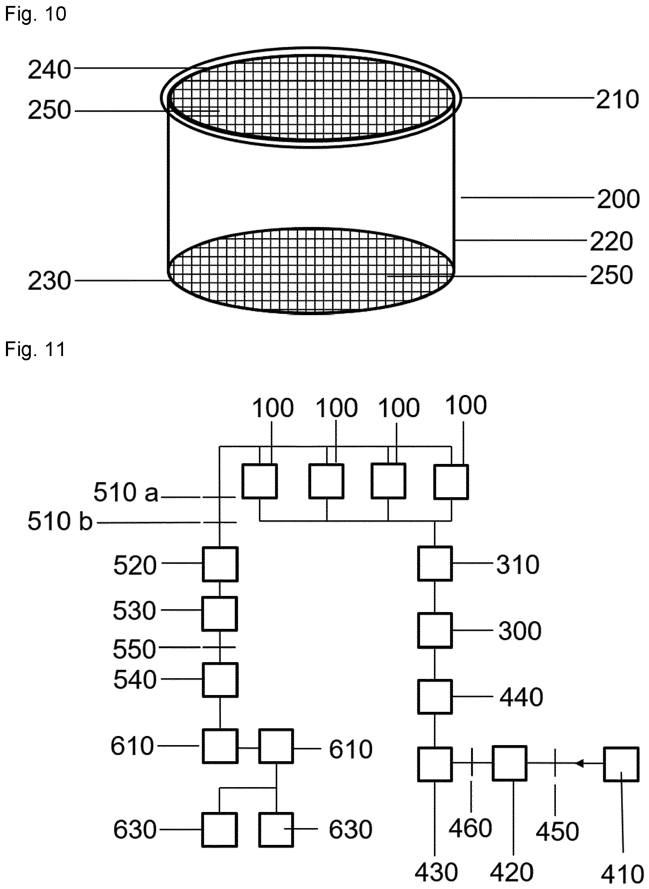

In Fig. 10 ist ein Adsorbentienbehälter 200 dargestellt. Dieser weist eine umlaufende Adsorbentienbehälterwand 220, damit abschließend einen ersten Adsorbentienbehälterboden 230 und einen zweiten Adsorbentienbehälterboden 240 auf. Der erste Adsorbentienbehälterboden 230 und der zweite Adsorbentienbehälterboden 240 sind jeweils mit einem Filtergewebe 250 ausgestaltet. Am zweiten Adsorbentienbehälterboden 240 ist eine Dichtung 210 angeordnet, die dazu eingerichtet ist, den Zwischenraum zwischen der Desorptionsbehälterwand des Desorptionsbehälters 170 und der Adsorbentienbehälterwand 220 gasdicht zu verschließen, wenn der Adsorbentienbehälter 200 in den Desorptionsbehälter 100 (s. Fig. 9) eingeführt ist.

In Fig. 11 ist eine Rückgewinnungsanlage unter Verwendung von in Fig. 9 gezeigten Desorptionsbehältern 100 schematisch dargestellt. In den Desorptionsbehältern 100 findet der Sterilisations- und Desorptionsvorgang statt. Hierzu verwendeter trockener Reinstdampf wird in einem Dampferzeuger 300 mit nachgeschalteter Trocknungseinrichtung 310, z.B. einer Tröpfchenabscheidekolonne, bereitgestellt. Der Reinstdampf wird aus entsalztem Wasser hergestellt, das in einer dem Dampferzeuger 300 vorgeschalteten Reinigungseinrichtung bereitgestellt wird, welche dazu eingerichtet ist, Wasser aus einer Wassereinspeisung 410 in einem ersten Schritt mittels einer Enthärtungsanlage 420 und in einem zweiten Schritt mittels eines Umkehrosmosemoduls 430 aufzureinigen. Zwischen Wassereinspeisung 410 und Enthärtungsanlage 420 ist ein Vorfilter 450 angeordnet. Zwischen Enthärtungsanlage 420 und Umkehrosmosemodul 430 ist ein Feinfilter 460 angeordnet. Dem Umkehrosmosemodul 430 nachgeschaltet ist ein Wasserspeicher 440, der dazu eingerichtet ist, das aufgereinigte Wasser für die Verwendung im Dampferzeuger 300 zu speichern. Die Desorptionsbehälter 100 sind zwischen dem Dampferzeuger 300 und einem Kondensatbereich angeordnet. Der Kondensatbereich ist dazu eingerichtet, das den Desorptionsbehälter 100 im Desorptionsschritt verlassende Gasgemisch zur Bildung eines Kondensats zu kühlen. Der Kondensatbereich umfasst einen Vorkühler 520, einen Zwischenkühler 530 sowie einen Nachkühler 540. Dem Vorkühler 520 vorgeschaltet sind ein Vorfilter 510a und ein Nachfilter 510b. Zwischen Zwischenkühler 530 und Nachkühler 540 ist ein Feinfilter 550 angeordnet.

An den Kondensatbereich schließt sich ein Auffangbereich an. Ein oder mehrere miteinander verbundene Kondensatauffangbehälter 610 sind dem Nachkühler 540 nachgeschaltet und sind dazu eingerichtet, das den Nachkühler 540 passierende Kondensat aufzufangen. Das in den Kondensatauffangbehältern 610 gesammelte Kondensat kann dann in einer Vorrichtung 1 zum Trennen eines Flüssigkeitsgemisches (s. Fig. 1) in eine erste Phase P1 und eine zweite Phase P2 aufgetrennt werden. An die Vorrichtung 1 schließen sich insbesondere ein oder mehrere Pufferbehälter 630 an, die dazu eingerichtet sind, das in seine Phasen getrennte Kondensat aufzunehmen.

**Bezugszeichenliste**

| | |
|---|---|
| Vorrichtung zum Trennen eines Flüssigkeitsgemisches in eine erste Phase und eine zweite Phase | 1 |
| Behälterraum | 2 |
| Vorrichtung zur Desorption halogenierter Kohlenwasserstoffe | 3 |
| Trennwand | 10 |
| Erste Trennwand | 10a |
| Zweite Trennwand | 10b |
| Weitere Trennwand | 10c |
| Erster Rand | 11 |
| Zweiter Rand | 12 |
| Dritter Rand | 13 |
| Vierter Rand | 14 |
| Erster Spalt | 15 |
| Öffnung | 16 |
| Einlauf | 17 |
| Erster Auslauf | 18 |
| Zweiter Auslauf | 19 |
| Erster Boden | 20 |
| Zweiter Boden | 21 |
| Zweiter Spalt | 22 |
| Mantel | 30 |
| Erster Teilraum | 40 |
| Zweiter Teilraum | 50 |
| Dritter Teilraum | 50a |
| Weiterer Teilraum | 50b |
| Messvorrichtung | 60 |
| Erste Steuervorrichtung | 61 |
| Erstes Ventil | 62a |
| Zweites Ventil | 62b |
| Abweiselement | 70 |
| Erste Öffnung | 71 |
| Zweite Öffnung | 72 |
| Leitelement | 80 |
| Partikel | 90 |
| Desorptionsbehälter | 100 |
| Adsorbens | 101 |
| Dampfeingang | 110 |
| Desorbatausgang | 120 |
| Desorptionsbehälterboden | 130 |
| Ventil | 140 |
| Temperatursensor | 150 |
| Zweite Steuervorrichtung | 160 |
| Desorptionsbehälterwand | 170 |
| Ausleitung | 190 |
| Adsorbentienbehälter | 200 |
| Dichtung | 210 |
| Adsorbentienbehälterwand | 220 |
| Erster Adsorbentienbehälterboden | 230 |
| Zweiter Adsorbentienbehälterboden | 240 |
| Filtergewebe | 250 |
| Dampferzeuger | 300 |
| Trocknungseinrichtung | 310 |
| Wassereinspeisung | 410 |
| Enthärtungsanlage | 420 |
| Umkehrosmosemodul | 430 |
| Wasserspeicher | 440 |
| Vorfilter | 450 |
| Erster Feinfilter | 460 |
| Vorfilter | 510a |
| Nachfilter | 510b |
| Vorkühler | 520 |
| Zwischenkühler | 530 |
| Nachkühler | 540 |
| Zweiter Feinfilter | 550 |
| Kondensatauffangbehälter | 610 |
| Pufferbehälter | 630 |
| Längsachse | L |
| Erste Höhe | h1 |
| Zweite Höhe | h2 |
| Dritte Höhe | h3 |
| Erste Phase | P1 |
| Zweite Phase | P2 |
| Phasengrenze | PG |
| Flüssigkeitspegel | FP |

## Patentansprüche

1. Vorrichtung (1) zum Trennen eines Flüssigkeitsgemisches in eine erste Phase (P1) und eine zweite Phase (P2), aufweisend
- einen Behälterraum (2) zur Aufnahme eines Flüssigkeitsgemisches,
- einen entlang einer Längsachse (L) erstreckten Mantel (30), der den Behälterraum (2) umschließt,
- zumindest einen senkrecht zu der Längsachse (L) erstreckten ersten Boden (20), der den Behälterraum (2) begrenzt,
- einen Einlauf (17) zum Einleiten eines Flüssigkeitsgemisches in den Behälterraum (2),
- einen ersten Auslauf (18) zum Abziehen einer ersten Phase (P1) des Flüssigkeitsgemisches aus dem Behälterraum (2) und
- einen zweiten Auslauf (19) zum Abziehen einer zweiten Phase (P2) des Flüssigkeitsgemisches aus dem Behälterraum (2), wobei der erste Auslauf (18) entlang der Längsachse (L) einen größeren Abstand von dem ersten Boden (20) aufweist als der zweite Auslauf (19), so dass der erste Auslauf (18) oberhalb des zweiten Auslaufes (19) anordenbar ist.
**dadurch gekennzeichnet,**
**dass** die Vorrichtung (1) mindestens eine entlang der Längsachse (L) verlaufende Trennwand (10) aufweist, die den Behälterraum (2) in zumindest einen ersten Teilraum (40) und einen zweiten Teilraum (50) aufteilt, wobei der Einlauf (17) in den ersten Teilraum (40) mündet, und wobei der erste Teilraum (40) mit dem zweiten Teilraum (50) in Strömungsverbindung steht, so dass sich das Flüssigkeitsgemisch in dem ersten Teilraum (40) und dem zweiten Teilraum (50) sammeln und in die erste Phase (P1) und die zweite Phase (P2) auftrennen kann.

2. Vorrichtung (1) nach Anspruch 1, **dadurch gekennzeichnet, dass** die Vorrichtung eine erste Trennwand (10a) und eine zweite Trennwand (10b) aufweist, wobei die erste Trennwand (10a) und die zweite Trennwand (10b) den Behälterraum (2) in den ersten Teilraum (40), den zweiten Teilraum (50) sowie einen dritten Teilraum (50a) aufteilen, und wobei der erste Teilraum (40), der zweite Teilraum (50) und der dritte Teilraum (50a) in Strömungsverbindung miteinander stehen, so dass sich das Flüssigkeitsgemisch in dem ersten Teilraum (40), dem zweiten Teilraum (50) und dem dritten Teilraum (50a) sammeln und in die erste und die zweite Phase auftrennen kann, insbesondere wobei die erste Trennwand (10a) eine entlang der Längsachse (L) verlaufende erste Höhe (h1) aufweist und die zweite Trennwand (10b) eine entlang der Längsachse (L) verlaufende zweite Höhe (h2) aufweist, die geringer ist als die erste Höhe (h1), insbesondere wobei die mindestens eine weitere Trennwand (10c) eine entlang der Längsachse (L) verlaufende dritte Höhe (h3) aufweist, die geringer ist als die erste Höhe (h1) und die zweite Höhe (h2).

3. Vorrichtung nach Anspruch 1 oder 2, **dadurch gekennzeichnet, dass** die mindestens eine Trennwand (10) rohrförmig ausgebildet ist, so dass der erste Teilraum (40) außerhalb der Trennwand (10) gebildet ist und der zweite Teilraum (50) innerhalb der Trennwand (10) gebildet ist.

4. Vorrichtung (1) nach einem der vorhergehenden Ansprüche, **dadurch gekennzeichnet, dass** der zweite Auslauf (19) an oder in dem ersten Boden (20) angeordnet ist.

5. Vorrichtung (1) nach einem der vorhergehenden Ansprüche, **dadurch gekennzeichnet, dass**
- die mindestens eine Trennwand (10) von dem ersten Boden (20) beabstandet ist, so dass der erste Teilraum (40) über einen zwischen der Trennwand (10) und dem ersten Boden (20) ausgebildeten ersten Spalt (15) mit dem zweiten Teilraum (50) in Strömungsverbindung steht, oder
- die mindestens eine Trennwand (10) mindestens eine Öffnung (16) aufweist, wobei der erste Teilraum (40) über die mindestens eine Öffnung (16) mit dem zweiten Teilraum (50) in Strömungsverbindung steht.

6. Vorrichtung nach einem der vorhergehenden Ansprüche, **dadurch gekennzeichnet, dass** der Einlauf (17) mit einem Rohrstück (17a) verbunden ist, wobei das Rohrstück eine Ausströmöffnung (17b) aufweist, die dem Mantel (30) der Vorrichtung (1) zugewandt ist, so dass aus der Ausströmöffnung (17b) austretendes Flüssigkeitsgemisch in Richtung des Mantels (30) geleitet wird.

7. Vorrichtung (1) nach einem der vorhergehenden Ansprüche, **dadurch gekennzeichnet, dass** die Vorrichtung (1) einen senkrecht zu der Längsachse (L) erstreckten zweiten Boden (21) aufweist, der den Behälterraum (2) an einem dem ersten Boden (20) gegenüberliegenden Ende begrenzt, wobei insbesondere der erste Teilraum (40) über einen zwischen der Trennwand (10) und dem zweiten Boden (21) ausgebildeten zweiten Spalt (22) mit dem zweiten Teilraum (50) in Strömungsverbindung steht.

8. Vorrichtung (1) nach einem der vorhergehenden Ansprüche, **dadurch gekennzeichnet, dass** die Vorrichtung (1) mindestens ein Ventil (62a, 62b) zum Öffnen und/oder Verschließen des Einlaufs (17), des ersten Auslaufs (18) und/oder des zweiten Auslaufs (19), eine Messvorrichtung (60) zum Ermitteln der Position einer Phasengrenze (PG) zwischen der ersten Phase (P1) und der zweiten Phase (P2) in dem Behälterraum (2) und eine erste Steuervorrichtung (61) zum Öffnen und/oder Verschließen des mindestens einen Ventils (62a, 62b) bei einer vordefinierten Position der Phasengrenze (PG), insbesondere so dass die Phasengrenze (PG) entlang der Längsachse (L) oberhalb eines dem ersten Boden (20) zugewandten ersten Randes (11) der Trennwand (10) und unterhalb eines dem ersten Boden (20) abgewandten zweiten Randes (12) der Trennwand (10) steht.

9. Vorrichtung (1) nach einem der vorhergehenden Ansprüche, **dadurch gekennzeichnet, dass** die Vorrichtung (1) ein Abweiselement (70) aufweist, wobei das Abweiselement (70) angrenzend an den ersten Auslass (18) positioniert ist, und wobei das Abweiselement (70) dazu eingerichtet ist, zu verhindern, dass in der ersten Phase (P1) vorhandene Partikel (90) und/oder Flüssigkeitstropfen der zweiten Phase (P2) zu dem ersten Auslass (18) gelangen, insbesondere wobei das Abweiselement (70) eine dem ersten Boden (20) zugewandte erste Öffnung (71) sowie eine der ersten Öffnung (71) entlang der Längsachse (L) gegenüberliegende zweite Öffnung (72) aufweist, wobei die Vorrichtung (1) ein angrenzend an die erste Öffnung (71) angeordnetes Leitelement (80) zum Leiten von Partikeln (90) und/oder Flüssigkeitstropfen an der ersten Öffnung (71) vorbei zu einer Oberfläche der ersten Phase (P1) aufweist, insbesondere wobei das Leitelement (80) flächig ausgebildet ist und in einer Ebene verläuft, die unter einem Winkel zwischen 0° und 90° zu der Längsachse (L) von dem Mantel (30) aus in Richtung eines dem ersten Boden (20) gegenüberliegenden Endes des Behälterraumes (2) verläuft.

10. System umfassend eine Vorrichtung (1) zum Trennen eines Flüssigkeitsgemisches nach einem der Ansprüche 1 bis 9 und eine Vorrichtung (3) zur Desorption halogenierter Kohlenwasserstoffe, wobei die Vorrichtung (3) zur Desorption halogenierter Kohlenwasserstoffe einen Desorptionsbehälter (100), ein in dem Desorptionsbehälter (100) angeordnetes Adsorbens (101), insbesondere ein Schüttgut, zum Adsorbieren halogenierter Kohlenwasserstoffe, einen Dampfeingang (110) zum Einleiten von Wasserdampf in den Desorptionsbehälter (100) und einen Desorbatausgang (120) zum Abziehen eines Wasser und halogenierte Kohlenwasserstoffe aufweisenden Desorbats aus dem Desorptionsbehälter (100) aufweist, wobei der Desorbatausgang (120) der Vorrichtung (3) zur Desorption halogenierter Kohlenwasserstoffe mit dem Einlauf (41) der Vorrichtung (1) zum Trennen eines Flüssigkeitsgemisches in Strömungsverbindung bringbar ist, so dass ein aus dem Desorbat durch Kondensation erzeugtes Flüssigkeitsgemisch über den Einlauf (41) in den ersten Teilraum (40) des Behälterraumes (2) einleitbar und in dem Behälterraum (2) in eine durch das Wasser gebildete erste Phase (P1) und eine durch die halogenierten Kohlenwasserstoffe gebildete zweite Phase (P2) trennbar ist.

11. System nach Anspruch 10, wobei die Vorrichtung (5) zur Desorption halogenierter Kohlenwasserstoffe ein Ventil (140) zum Verschließen des Desorbatausgangs (120), einen Temperatursensor (150) zum Ermitteln der Temperatur des Adsorbens (101) und eine zweite Steuervorrichtung (160) aufweist, wobei die zweite Steuervorrichtung (160) dazu eingerichtet ist, das Ventil (140) und die Einleitung von Wasserdampf in den Desorptionsbehälter (100) über den Dampfeingang (110) derart zu steuern, dass das Adsorbens (101) für mindestens 10 min bei einer Temperatur von mehr als 120°C und bei einem Druck von 0,15 MPa bis 0,4 MPa in Kontakt mit dem Wasserdampf bringbar ist, so dass die an dem Adsorbens (101) adsorbierten halogenierten Kohlenwasserstoffe sterilisierbar sind.

12. Verfahren zum Trennen eines Flüssigkeitsgemisches in eine erste Phase (P1) und eine zweite Phase (P2) mittels einer Vorrichtung (1) nach einem der Ansprüche 1 bis 9, wobei
- die zweite Phase (P2) insbesondere eine größere Dichte aufweist als die erste Phase (P1),
- die Vorrichtung (1) so positioniert wird, dass die Längsachse (L) vertikal verläuft, der erste Boden (20) den Behälterraum (2) nach unten hin begrenzt und der erste Auslauf (18) entlang der Längsachse (L) oberhalb des zweiten Auslaufes (19) angeordnet ist,
- ein Flüssigkeitsgemisch durch den Einlauf (41) in den ersten Teilraum (40) des Behälterraumes (2) eingeleitet wird, so dass sich das Flüssigkeitsgemisch zumindest in dem ersten Teilraum (40) und dem zweiten Teilraum (50) sammelt und in die erste Phase (P1) und die zweite Phase (P2) auftrennt,
- die erste Phase (P1) durch den ersten Auslauf (18) aus dem Behälterraum (2) abgezogen wird, insbesondere wobei die zweite Phase (P2) durch den zweiten Auslauf (19) aus dem Behälterraum (2) abgezogen wird.

13. Verfahren nach Anspruch 12, wobei eine Position einer Phasengrenze (PG) zwischen der ersten Phase (P1) und der zweiten Phase (P2) in dem Behälterraum (2) ermittelt wird, und wobei der Einlauf (17), der erste Auslauf (18) und/oder der zweite Auslauf (19) bei einer vordefinierten Position der Phasengrenze (PG) geöffnet oder verschlossen werden, insbesondere so dass die Phasengrenze (PG) entlang der Längsachse (L) oberhalb eines dem ersten Boden (20) zugewandten ersten Randes (11) der Trennwand (10) und unterhalb eines dem ersten Boden (20) abgewandten zweiten Randes (12) der Trennwand (10) steht.

14. Verfahren nach Anspruch 12 oder 13, wobei das Flüssigkeitsgemisch Wasser und einen halogenierten Kohlenwasserstoff, insbesondere Sevofluran und/oder Isofluran, aufweist, und wobei das Wasser die erste Phase (P1) bildet und der halogenierte Kohlenwasserstoff die zweite Phase (P2) bildet.

15. Verfahren nach Anspruch 14, wobei das Flüssigkeitsgemisch mittels Durchströmen eines adsorbierte halogenierte Kohlenwasserstoffe umfassenden Adsorbens (101) mit Wasserdampf in einem Desorptionsschritt unter Bildung eines Desorbats und anschließende Kühlung des Desorbats erzeugt wird, insbesondere wobei das halogenierte Kohlenwasserstoffe umfassende Adsorbens (101) in einem dem Desorptionsschritt vorangehenden Sterilisationsschritt für mindestens 10 min bei einer Temperatur von mehr als 120°C und bei einem Druck von 0,15 MPa bis 0,4 MPa in Kontakt mit Wasserdampf gebracht wird, so dass die halogenierten Kohlenwasserstoffe sterilisiert werden.
